(19) Europäisches Patentamt / European Patent Office / Office européen des brevets

(11) EP 3 591 025 B1

(12) FASCICULE DE BREVET EUROPEEN

(45) Date de publication et mention de la délivrance du brevet:
**14.04.2021 Bulletin 2021/15**

(51) Int Cl.:
***C09K 11/06*** *(2006.01)* ***G01T 1/20*** *(2006.01)*

(21) Numéro de dépôt: **19183997.6**

(22) Date de dépôt: **02.07.2019**

(54) **SCINTILLATEUR PLASTIQUE DOPÉ PAR DES IONS MÉTALLIQUES ET SES UTILISATIONS**

MIT METALLIONEN DOTIERTER KUNSTSTOFF-SZINTILLATOR UND SEINE VERWENDUNGEN

PLASTIC SCINTILLATOR DOPED WITH METAL IONS AND USES THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.07.2018 FR 1856136**

(43) Date de publication de la demande:
**08.01.2020 Bulletin 2020/02**

(73) Titulaire: **Commissariat à l'énergie atomique et aux énergies alternatives**
**75015 Paris (FR)**

(72) Inventeurs:
- **HAMEL, Matthieu**
  **50100 CHERBOURG-OCTEVILLE (FR)**
- **FRANGVILLE, Camille**
  **77130 VILLE SAINT JACQUES (FR)**
- **BERTRAND, Guillaume**
  **07380 MEYRAS (FR)**

(74) Mandataire: **Brevalex**
**95, rue d'Amsterdam**
**75378 Paris Cedex 8 (FR)**

(56) Documents cités:
**FR-A1- 2 969 169** **FR-A1- 3 030 776**
**US-B1- 9 234 968**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 591 025 B1

## Description

### DOMAINE TECHNIQUE

L'invention se rapporte au domaine de la scintillation plastique.

Plus spécifiquement, l'invention se rapporte à un scintillateur plastique dopé par des ions métalliques et présentant de remarquables propriétés de scintillation et, en particulier, une remarquable capacité à détecter les neutrons rapides, les neutrons thermiques et les rayons gamma.

Ce scintillateur est donc apte à être utilisé notamment pour détecter et identifier la présence de neutrons rapides, de neutrons thermiques et/ou de rayons gamma dans un rayonnement, ou pour identifier par spectrométrie gamma une signature caractéristique d'au moins un radionucléide émetteur gamma dans un rayonnement gamma.

L'invention se rapporte également aux utilisations de ce scintillateur plastique.

L'invention trouve des applications dans tous les domaines dans lesquels des scintillateurs plastiques sont susceptibles d'être utilisés et en particulier :

- dans l'industrie, par exemple pour la mesure de paramètres physiques de pièces en cours de fabrication, pour l'inspection non destructrice de matériaux, pour le contrôle de la radioactivité aux points d'entrée et de sorties de sites, notamment nucléaires, et pour le contrôle de déchets radioactifs ;
- en géophysique, par exemple pour l'évaluation de la radioactivité naturelle des sols ;
- en physique fondamentale et, notamment, en physique nucléaire ;
- dans la sécurité des biens et des personnes, par exemple pour la sécurité d'infrastructures critiques, le contrôle de marchandises en circulation (bagages, conteneurs, véhicules, ...) ainsi que pour la radioprotection des travailleurs susceptibles d'être exposés à des rayonnements ionisants dans l'exercice de leur activité professionnelle (radiologie diagnostique, radiologie interventionnelle, radiothérapie, curiethérapie, médecine nucléaire, etc) ; ou encore
- en imagerie médicale qui représente aujourd'hui l'un des principaux domaines d'application des scintillateurs en général et des scintillateurs plastiques en particulier.

### ÉTAT DE LA TECHNIQUE ANTÉRIEURE

Un scintillateur plastique (aussi appelé plastique scintillant) est un matériau polymère fluorescent qui a la capacité d'émettre des photons, dits photons de scintillation, lorsqu'il est excité par une particule ou un rayonnement ionisant.

Un scintillateur plastique se compose classiquement d'une matrice polymère, de nature organique, dans laquelle est (sont) inclus au moins un fluorophore et, le plus souvent, deux fluorophores différents, à savoir : un fluorophore dit primaire, qui a pour rôle de transformer une énergie électronique en une lumière fluorescente et un fluorophore dit secondaire, qui joue le rôle de décaleur de longueur d'onde (ou « *wavelength shifter* » en anglais) en absorbant la lumière émise par le fluorophore primaire et en la réémettant à une longueur d'onde plus élevée, dans la plage où le rendement quantique de conversion des photons de scintillation en photoélectrons d'un convertisseur traditionnel (c'est-à-dire d'un tube photomultiplicateur) est le plus important.

Outre qu'il doit être capable de transformer avec un bon rendement l'énergie des particules ou des rayonnements ionisants en énergie lumineuse utile, un scintillateur plastique doit présenter un certain nombre de caractéristiques : en particulier, il doit être transparent aux longueurs d'onde d'émission des photons de scintillation ; il doit être chimiquement et mécaniquement stable et il doit être facile à produire.

De ce fait, les scintillateurs plastiques comprennent typiquement comme matrice polymère, une matrice résultant de la polymérisation de monomères et/ou d'oligomères essentiellement, voire exclusivement, hydrocarbonés et, le plus souvent, aromatiques telle qu'une matrice de polystyrène, de polyvinyltoluène ou une matrice de poly(*N*-vinylcarbazole).

Il est connu que l'incorporation de métaux dans des scintillateurs plastiques permet de modifier et/ou d'améliorer leurs performances de scintillation.

Il est également connu que les métaux sont, d'une manière générale, faiblement solubles dans les milieux apolaires et, partant, dans les compositions de monomères et/ou d'oligomères à partir desquelles sont réalisées les matrices polymères des scintillateurs plastiques.

Parmi les ions métalliques d'intérêt pour la scintillation plastique, figure notamment le lithium qui est considéré comme l'un des plus difficiles à inclure dans une matrice polymère du type de celles qui entrent dans la constitution des scintillateurs plastiques.

L'une des stratégies proposées dans la littérature pour surmonter cette difficulté consiste à incorporer le lithium dans les scintillateurs plastiques sous la forme d'un carboxylate.

Ainsi, par exemple, l'utilisation du méthacrylate de lithium a été proposée par Breukers et al. dans Nucl. Instruments Methods Phys. Res. Sect. A Accel. Spectrometers, Detect. Assoc. Equip. 2013, 701, 58-61, ci-après référence **[1] ;** celle du salicylate de lithium et du 3-phénylsalicylate de lithium a été proposée par Mabe et al. dans Nucl. Instruments Methods Phys. Res. Sect. A Accel. Spectrometers, Detect. Assoc. Equip. 2016, 806, 80-86, ci-après référence **[2],** tandis que celle du pivalate de lithium a été proposée par Cherepy et al. dans Nucl. Instruments Methods Phys. Res. Sect. A Accel. Spectrometers, Detect. Assoc. Equip. 2015, 778, 126-132, ci-après référence **[3],** et dans le brevet US 9,234,968, ci-après référence **[4].**

Par ailleurs, la solubilité d'une trentaine de carboxylates de lithium dans des hydrocarbures aliphatiques et des hydrocarbures aromatiques dont le benzène, qui est extrêmement proche du styrène à la fois structurellement et sur le plan du comportement chimique, a été étudiée par Kissa dans J. Coll. Sci. 1962, 857-864, ci-après référence **[5],** et dans J. Coll. Sci. 1964, 279-289, ci-après référence **[6].** Parmi ces carboxylates, figurent notamment le pivalate de lithium, le 2-méthylbutyrate de lithium, le 3-méthylbutyrate de lithium, le 2,2-diméthylbutyrate de lithium et l'hexanoate de lithium. Cet Auteur montre que la capacité de ces carboxylates à solubiliser le lithium dans le benzène est par ordre croissant : pivalate de lithium < 2-méthylbutyrate de lithium = 3-méthylbutyrate de lithium < 2,2-diméthylbutyrate de lithium < hexanoate de lithium

US9234968 B1 divulgue un scintillateur plastique comprenant une matrice polymère dans laquelle sont inclus un fluorophore et pivalate de bismuth ou de lithium.

Les Inventeurs ont souhaité optimiser l'incorporation de métaux dans les matrices polymères de scintillateurs plastiques et, par conséquent, les propriétés de scintillation de ces scintillateurs.

Or, dans le cadre de leurs travaux, ils ont constaté qu'à rebours des enseignements des références **[5]** et **[6]** et de manière non prévisible par ailleurs, le 2-méthylbutyrate de lithium est, de tous les carboxylates de lithium qu'ils ont étudiés (16 au total), celui qui présente la solubilité la plus élevée dans un milieu apolaire et qui permet donc la solubilisation la plus élevée du lithium dans ce type de milieu.

Ils ont aussi constaté que cette solubilité est bien plus élevée que celle des carboxylates de lithium dont l'utilisation est préconisée dans les références **[1]** à **[4].**

Ils ont en outre constaté que ce gain de solubilité en milieu apolaire n'est pas réservé au seul 2-méthylbutyrate de lithium mais est également obtenu pour d'autres 2-méthylbutyrates métalliques comme, par exemple, le tri(2-méthylbutyrate) de bismuth.

Et c'est sur ces constatations expérimentales qu'est basée l'invention.

## EXPOSÉ DE L'INVENTION

L'invention a, en premier lieu, pour objet un scintillateur plastique, qui comprend une matrice polymère dans laquelle sont inclus au moins un fluorophore et au moins un carboxylate métallique, et qui est caractérisé en ce que le carboxylate métallique est un 2-méthylbutyrate métallique de formule (I) ci-après :

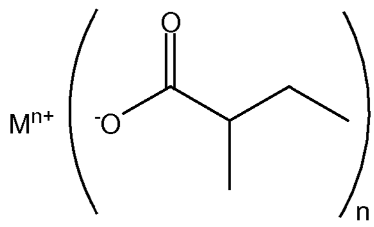
(I)

dans laquelle M représente un métal choisi parmi le lithium, le gadolinium, le bismuth, le plomb, le cadmium, l'étain, le tungstène, le mercure et l'osmium et n correspond au degré d'oxydation du métal M.

Dans ce qui précède et ce qui suit, on entend :

- par « polymère », aussi bien un homopolymère, c'est-à-dire un polymère qui est constitué d'une seule unité répétitive, qu'un copolymère, c'est-à-dire un polymère qui est constitué d'au moins deux unités répétitives différentes, de façon ordonnée ou aléatoire ;
- par « 2-méthylbutyrate métallique », tout composé qui répond à la formule (I) et ses différents énantiomères; ainsi, l'expression « 2-méthylbutyrate métallique» désigne aussi bien un 2-méthylbutyrate métallique *stricto sensu* comme le 2-méthylbutyrate de lithium qu'un di(2-méthylbutyrate) métallique comme le di(2-méthylbutyrate) de plomb ou de cadmium ou de tungstène, un tri(2-méthylbutyrate) métallique comme le tri(2-méthylbutyrate) de gadolinium ou de bismuth, un tétra(2-méthylbutyrate) métallique comme le tétra(2-méthylbutyrate) de plomb ou de tungstène, etc ;
- par « degré d'oxydation du métal M », le nombre de charges portées par ce métal dans le 2-méthylbutyrate métallique, étant entendu que ce nombre de charges compense le nombre de charges apportées par le ou les anions 2-méthylbutyrates pour que l'électroneutralité du 2-méthylbutyrate métallique soit assurée ; et

- par « milieu apolaire », un milieu constitué d'un ou plusieurs composés organiques apolaires, c'est-à-dire d'un ou plusieurs composés dont la constante diélectrique à 20 °C est inférieure ou égale à 6.

Il est à noter que le choix du métal M dans le 2-méthylbutyrate métallique de formule (I) ci-avant n'implique pas forcément un choix isotopique. Autrement dit, le métal M choisi peut présenter une composition isotopique naturelle (ce sera, par exemple, le cas du bismuth) aussi bien qu'être enrichi en un isotope particulier (ce sera, par exemple, le cas du lithium qui sera, de préférence, un lithium naturel enrichi en lithium-6, et du gadolinium qui sera, de préférence, un gadolinium enrichi en gadolinium-155 ou 157).

Conformément à l'invention, le métal M est, de préférence, choisi :

- soit parmi le lithium et le gadolinium parce que ces métaux présentent des sections efficaces de capture neutronique thermique élevées, ce qui en fait des candidats de choix pour la détection des neutrons thermiques ;
- soit parmi le bismuth et le plomb parce que ces métaux sont, parmi les métaux non radioactifs répertoriés dans le tableau périodique des éléments, ceux qui présentent les numéros atomiques les plus élevés (respectivement 83 et 82), ce qui en fait des candidats de choix pour l'identification de signatures caractéristiques d'émetteurs γ.

Plus spécifiquement, le 2-méthylbutyrate métallique est, de préférence choisi parmi :

- le 2-méthylbutyrate de lithium de formule (Ia) ci-après :

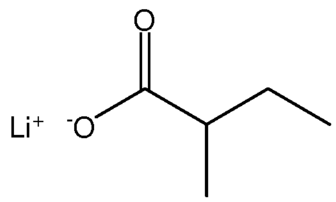

(Ia)

- le tri(2-méthylbutyrate) de gadolinium et le tri(2-méthylbutyrate) de bismuth de formule (Ib) ci-après :

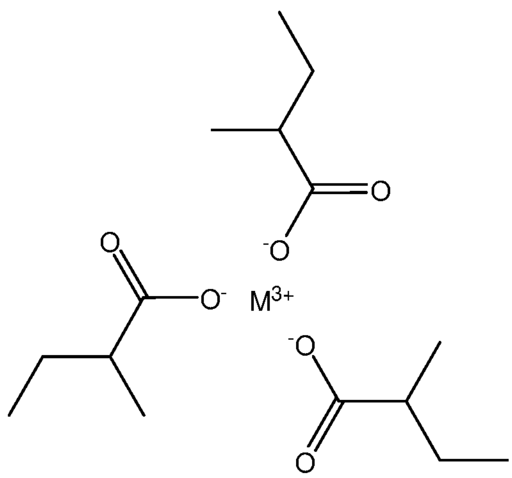

(Ib) avec M = Gd ou Bi ; et

- le di(2-méthylbutyrate) de plomb de formule (Ic) ci-après :

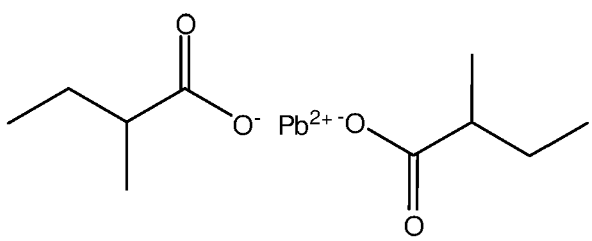

(Ic)

Conformément à l'invention, la matrice polymère comprend, de préférence, un polymère issu de la polymérisation radicalaire d'au moins un composé polymérisable comprenant un ou plusieurs groupes choisis parmi les groupes vinyle (c'est-à-dire de formule $-CH=CH_2$) allyle (c'est-à-dire de formule $-CH_2-CH=CH_2$) et 1-méthyléthényle (c'est-à-dire de formule $-C(CH_3)=CH_2$), encore connu sous le nom de groupe pseudoallyle.

Le composé polymérisable peut comprendre au moins un cycle aromatique, c'est-à-dire un monocycle ou un polycycle qui satisfait à la règle de Hückel et qui présente donc un nombre d'électrons $\pi$ délocalisés égal à $4n + 2$, auquel cas le composé polymérisable peut notamment être choisi parmi le styrène, les isomères du méthylstyrène (2-vinyltoluène, 3-vinyltoluène, 4-vinyltoluène et $\alpha$-méthylstyrène), les isomères du diméthylstyrène (ou vinylxylène, par exemple 2,3-diméthylstyrène, 2,4-diméthylstyrène, 2,5-diméthylstyrène, etc), les isomères du vinylbiphényle (par exemple, 2-vinylbiphényle, 4-vinylbiphényle, etc), les isomères de l'allyltoluène (par exemple, 3-allyltoluène, 4-allyltoluène, etc), les isomères du vinylnaphtalène (par exemple, 1-vinylnaphtalène, 2-vinylnaphtalène, etc) et le *N*-vinylcarbazole.

En variante, le composé polymérisable peut ne comprendre aucun cycle aromatique, auquel cas il peut notamment être choisi parmi l'acide acrylique, l'acide méthacrylique, l'acrylamide, le méthacrylamide, les acrylates d'alkyles ou d'hydroxyalkyles dont le groupe alkyle, qui peut être linéaire ou ramifié, comprend de 1 à 20 atomes de carbone, et les méthacrylates d'alkyles ou d'hydroxyalkyles dont le groupe alkyle, qui peut être linéaire ou ramifié, comprend de 1 à 20 atomes de carbone.

De manière préférée, le polymère résulte de la polymérisation radicalaire d'un premier composé polymérisable et d'un deuxième composé polymérisable, le premier composé polymérisable étant avantageusement le styrène, le 2-vinyltoluène, le 3-vinyltoluène ou le 4-vinyltoluène, et le deuxième composé polymérisable étant avantageusement l'acide acrylique ou l'acide méthacrylique.

Conformément à l'invention, le polymère formant la matrice polymère peut être réticulé en vue notamment d'optimiser les propriétés mécaniques du scintillateur plastique, auquel cas ce polymère résulte d'une polymérisation radicalaire réticulante (c'est-à-dire avec réticulation) d'au moins un composé polymérisable tel que précédemment défini, en présence d'un agent de réticulation.

Cet agent de réticulation, qui doit présenter au moins deux groupes polymérisables, est, de préférence, choisi parmi les isomères du divinylbenzène comme le 1,2-divinylbenzène, le 1,3-divinylbenzène ou le 1,4-divinylbenzène, les diacrylates d'alkyles ou d'hydroxyalkyles comprenant un groupe alkyle, linéaire ou ramifié, en C2 à C20, comme le diacrylate de butane-1,3-diyle, et les diméthacrylates d'alkyles ou d'hydroxyalkyles comprenant un groupe alkyle, linéaire ou ramifié, en C2 à C20, comme le diméthacrylate de butane-1,4-diyle.

Parmi ceux-ci, préférence est donnée aux diméthacrylates d'alkyles pour leur transparence et, tout particulièrement, au diméthacrylate de butane-1,4-diyle, ainsi qu'au 1,4-divinylbenzène.

Lorsqu'un agent de réticulation est utilisé, alors celui-ci représente, de préférence, de 0,5 % à 50 % molaires et, mieux encore, de 5 % à 30 % molaires, et encore plus préférentiellement de 5 % à 17% molaires du mélange formé par le(s) composé(s) polymérisable(s) et cet agent.

Comme précédemment indiqué, le scintillateur plastique peut ne comprendre qu'un fluorophore, auquel cas celui-ci est, de préférence, choisi parmi les composés qui présentent un spectre d'absorption dont l'intensité maximale d'absorption se situe entre 310 nm et 340 nm, un spectre d'émission dont l'intensité maximale d'émission se situe entre 380 nm et 450 nm et un rendement quantique de fluorescence dans un milieu apolaire supérieur à 0,2 et, de préférence, supérieur à 0,5.

À cet égard, on précise que le rendement quantique de fluorescence d'un fluorophore correspond à la proportion de photons de luminescence émis par quantité de photons absorbés par ce fluorophore. Ce rendement peut être mesuré avec une sphère d'intégration en tant que module d'un spectrofluorimètre (voir, par exemple, Rohwer et Martin, J. Lumin. 2005, 115(3-4), 77-90, ci-après référence **[7])** ou, en l'absence de sphère d'intégration, par mesure relative, c'est-à-dire par rapport à une référence, de l'échantillon, la référence étant alors typiquement une solution sulfate de quinine (voir, par exemple, Velapoli et Mielenz, Appl. Opt. 1981, 20(9), 1718, ci-après référence **[8]).**

Toutefois, dans le cadre de l'invention on préfère que le scintillateur plastique comprenne au moins deux fluorophores, à savoir au moins un premier fluorophore, dit ci-après fluorophore primaire, et au moins un deuxième fluorophore, dit ci-après fluorophore secondaire, dont le spectre d'absorption recouvre au mieux le spectre d'émission du premier fluorophore, et ce, pour optimiser les transferts d'énergie entre les deux fluorophores et, par conséquent, les propriétés de détection du scintillateur plastique.

Selon un premier mode de réalisation préféré du scintillateur plastique :

- le fluorophore primaire est un composé qui présente un spectre d'absorption dont l'intensité maximale d'absorption se situe entre 250 nm et 340 nm, un spectre d'émission dont l'intensité maximale d'émission se situe entre 310 nm et 380 nm et un rendement quantique de fluorescence dans un milieu apolaire supérieur à 0,2 et, de préférence, supérieur à 0,5, tandis que
- le fluorophore secondaire est un composé qui présente un spectre d'absorption dont l'intensité maximale d'absorption se situe entre 330 nm et 400 nm, un spectre d'émission dont l'intensité maximale d'émission se situe entre 380 nm

et 450 nm et un rendement quantique de fluorescence dans un milieu apolaire supérieur à 0,2 et, de préférence, supérieur à 0,5.

Ainsi, le fluorophore primaire peut notamment être le 2,5-diphényloxazole (ou PPO), le [*para*]-terphényle (ou p-TP), le [*méta*]-terphényle (ou m-TP), le biphényle, le 2-phényl-5-(4-biphénylyl)-1,3,4-oxadiazole (ou PBD), le 2-(4'-*t*-butylphényl)-5-(4"-biphénylyl)-1,3,4-oxiadiazole (ou butyl-PBD), l'anthracène, le [*para*]-quaterphényle, le tétraphénylbutadiène, le *N*-éthylcarbazole, le *N*-(2-éthylhexyl)carbazole, le 4-isopropyl-biphényle ou le [*para*]-sexiphényle.

Parmi ceux-ci, préférence est donnée au PPO, au [*para*]-terphényle et aux mélanges de ceux-ci.

Conformément à l'invention, le fluorophore primaire peut être lié de manière covalente à la matrice polymère, par exemple *via* la participation à la polymérisation du ou des composés polymérisables destinés à former cette matrice d'un groupe vinyle, allyle ou pseudoallyle qui est porté par le fluorophore primaire. À titre d'exemples d'un tel fluorophore primaire, on peut citer le 1-vinylbiphényle, le 2-vinylbiphényle et le méthacrylate de 9-anthracényle.

Quant au fluorophore secondaire, il peut notamment être le 9,10-diphénylanthracène, le 1,4-bis(5-phényl-2-oxazolyl)benzène (ou POPOP), le 1,4-bis(4-méthyl-5-phényl-2-oxazolyl)benzène (ou diméthylPOPOP), du bis-méthylstyrylbenzène (ou bis-MSB) ou le 9,10-diphénylanthracène (ou 9,10-DPA).

Parmi ceux-ci, préférence est donnée au POPOP.

Selon un deuxième mode de réalisation préféré du scintillateur plastique :

- le fluorophore primaire est un composé tel que précédemment défini, tandis que
- le fluorophore secondaire est un composé qui présente un spectre d'absorption dont l'intensité maximale d'absorption se situe entre 360 nm et 400 nm, un spectre d'émission dont l'intensité maximale d'émission se situe entre 470 nm et 540 nm et un rendement quantique de fluorescence dans un milieu apolaire supérieur à 0,5, auquel cas il peut notamment être la coumarine 6, la coumarine 7, la coumarine 30, la coumarine 102, la coumarine 151, la coumarine 314, la coumarine 334, la coumarine 7 ou la 3-hydroxyflavone.

Selon un troisième mode de réalisation préféré du scintillateur plastique,

- le fluorophore primaire est un composé tel que précédemment défini, tandis que
- le fluorophore secondaire est un composé qui présente un spectre d'absorption dont l'intensité maximale d'absorption se situe entre 350 nm et 400 nm, un spectre d'émission dont l'intensité maximale démission se situe entre 560 nm et 630 nm et un rendement quantique de fluorescence dans un milieu apolaire supérieur à 0,5, auquel cas il peut notamment être le rouge de Nile, la rhodamine B, un sel de rhodamine B, le 4-(dicyanométhylène)-2-méthyl-6-(4-diméthylaminostyryl)-4H-pyrane (ou DCM), le pyrrométhène 580 ou tout composé à noyau pérylènediimide comme le *N,N*'-bis(2,5-di-*tert* -butyiphényl)-3,4,9,10-pérylènedicarboximide.

Lorsque le scintillateur plastique ne comprend qu'un fluorophore, alors la masse de ce fluorophore dans le scintillateur plastique est typiquement comprise entre 1 % et 30 % et, mieux encore, entre 20 % et 30 % de la masse du scintillateur plastique.

Lorsque le scintillateur plastique comprend au moins un fluorophore primaire et au moins un fluorophore secondaire, alors la masse du fluorophore primaire dans le scintillateur plastique est typiquement comprise entre 1 % et 30 %, de préférence entre 20 % et 30 % et, mieux encore, entre 10 % et 20 % de la masse du scintillateur plastique, tandis que la masse du fluorophore secondaire est, elle, typiquement comprise entre 0,002 % et 0,2 % de la masse du scintillateur plastique.

Quant à la masse du 2-méthylbutyrate métallique dans le scintillateur plastique, elle est typiquement comprise entre 0,1 % et 50 % de la masse du scintillateur plastique.

Mieux encore, elle est comprise entre 2 % et 5 % de la masse du scintillateur plastique lorsque le 2-méthylbutyrate métallique est le 2-méthylbutyrate de lithium, tandis qu'elle est comprise entre 15 % et 45 % de la masse du scintillateur plastique lorsque le 2-méthylbutyrate métallique est le tri(2-méthylbutyrate) de bismuth.

Le scintillateur plastique de l'invention présente de nombreux avantages.

En effet, non seulement les 2-méthylbutyrates métalliques qui entrent dans la constitution de ce scintillateur présentent des propriétés de solubilité remarquables en milieu apolaire mais ils ont de plus une masse molaire relativement faible (chaque anion 2-méthylbutyrate ne comprenant, en effet, que 5 atomes de carbone), ce qui permet d'augmenter encore la teneur massique en ions métalliques du scintillateur plastique par rapport à ce que cette teneur serait si ces ions métalliques étaient incorporés *via* un carboxylate métallique de masse molaire plus élevée comme, par exemple, un salicylate ou un 3-phénylsalicylate tels que proposés dans la référence **[2].**

Il en résulte que le scintillateur plastique de l'invention peut être dopé avec des teneurs particulièrement élevées en ions métalliques et, notamment, en ions lithium, gadolinium, bismuth et plomb, avec à la clé des performances remarquables de scintillation.

Le scintillateur plastique de l'invention présente de plus les propriétés de transparence et de stabilité chimique et mécanique requises pour un scintillateur plastique.
Il peut en outre aisément être produit à une échelle industrielle.
En effet, il peut être obtenu par un procédé comprenant les étapes de :

- préparation d'un mélange liquide comprenant le(s) composé(s) polymérisable(s), le(s) fluorophore(s), le 2-méthylbutyrate métallique et, le cas échéant, l'agent de réticulation (si une réticulation du polymère formant la matrice polymère est souhaitée) ;
- dégazage du mélange liquide résultant ;
- transfert de ce mélange dans un moule préalablement débarrassé de toute impureté et trace d'humidité et de forme adaptée à celle que l'on souhaite conférer au scintillateur plastique ;
- polymérisation radicalaire, éventuellement réticulante, du (des) composé(s) polymérisable(s) pour transformer le contenu du moule en un matériau polymère solide, cette polymérisation étant, de préférence, initiée par voie thermique pour que la matrice polymère présente le moins d'impuretés possible ;
- démoulage du matériau contenu dans le moule ; puis
- l'usinage et le polissage ce matériau pour lui conférer un état de surface optiquement compatible avec l'application (les applications) à laquelle (auxquelles) est destiné le scintillateur liquide.

Quant au 2-méthylbutyrate métallique, il peut préalablement être obtenu par les voies de synthèse classiquement utilisées pour la préparation de carboxylates métalliques avec, dans ce cas, une réaction d'un composé du métal M tel qu'un hydroxyde, un oxyde ou un organométallique avec l'acide 2-méthylbutyrique dans un rapport molaire adapté au degré d'oxydation de ce métal.
L'invention a également pour objet l'utilisation d'un scintillateur plastique tel que précédemment défini pour détecter et identifier la présence de neutrons rapides, de neutrons thermiques et/ou de rayons gamma dans un rayonnement, cette utilisation comprenant typiquement les étapes de :

- fourniture d'un détecteur à scintillation comprenant le scintillateur plastique relié à un photomultiplicateur mis sous tension ;
- exposition du scintillateur au rayonnement, moyennant quoi des signaux lumineux sont émis par le scintillateur et convertis en signaux (ou impulsions) électriques par le photomultiplicateur ;
- conversion des signaux électriques émis par le photomultiplicateur en données numériques ; et
- traitement des données numériques par un logiciel.

Lorsque le scintillateur plastique comprend du 2-méthylbutyrate de lithium, alors la détection et l'identification de la présence des neutrons rapides, des neutrons thermiques et des rayons gamma dans le rayonnement peut comprendre, de plus, une discrimination entres les neutrons rapides, les neutrons thermiques et les rayons gamma, auquel cas le traitement des données numériques est, de préférence, réalisé par forme de l'impulsion (ou PSD de « *Pulse Shape Discrimination »).*
L'invention a encore pour objet l'utilisation d'un scintillateur plastique tel que précédemment défini pour identifier une signature caractéristique d'au moins un radionucléide émetteur gamma dans un rayonnement gamma ou, autrement dit, pour identifier la présence d'un radionucléide émetteur gamma dans une source émettrice d'un rayonnement gamma, cette utilisation comprenant typiquement les étapes de :

- fourniture d'un détecteur à scintillation comprenant le scintillateur plastique relié à un photomultiplicateur mis sous tension ;
- exposition du scintillateur au rayonnement, moyennant quoi des signaux lumineux sont émis par le scintillateur et convertis en signaux (ou impulsions) électriques par le photomultiplicateur ;
- conversion des signaux électriques émis par le photomultiplicateur en spectres en énergie ; et
- analyse des spectres en énergie par spectrométrie gamma et identification d'un pic photoélectrique correspondant à la signature du radionucléide.

D'autres avantages et caractéristiques de l'invention apparaîtront à la lecture du complément de description qui suit, qui se réfère aux figures jointes en annexe et qui se rapporte à des exemples de synthèse de 2-méthylbutyrates métalliques et de mise en évidence de leur solubilité en milieux apolaires ainsi qu'à des exemples de préparation et de caractérisation photophysique de scintillateurs plastiques de l'invention.
Il va de soi que ces exemples ne sont donnés qu'à titre d'illustration de l'objet de l'invention et ne constituent en aucun cas une limitation de cet objet.

## BRÈVE DESCRIPTION DES FIGURES

La figure 1 illustre les maxima de solubilité, notés $\%_m Li_{max,sol}$, tels qu'obtenus pour 16 carboxylates de lithium différents, notés A à P, dont le 2-méthylbutyrate de lithium (barre F), dans un mélange comprenant du styrène et de l'acide méthacrylique, dans un rapport volumique de 8/2, à 60° C.

La figure 2 illustre les maxima de solubilité, notés $\%_m Bi_{max,sol}$, tels qu'obtenus pour le tripivalate de bismuth (barre A) et pour le tri(2-méthylbutyrate) de bismuth (barre B) dans du styrène à température ambiante.

La figure 3 illustre les maxima de solubilité, notés $\%_m Gd_{max,sol,}$ tels qu'obtenus pour le tri(2-méthylbutyrate) de gadolinium dans du styrène à température ambiante, 60 °C et 110 °C.

La figure 4 illustre les spectres de rendement de luminescence (ou spectres y), exprimés en nombre de coups, noté $N_C$, en fonction du numéro de canal, noté #C, tel qu'obtenus pour un scintillateur plastique chargé en 2-méthylbutyrate de lithium à hauteur de 2,43 % massiques (spectre S1) et, à titre de comparaison, pour un scintillateur plastique commercial de référence (spectre R), après irradiation au césium-137.

Les figures 5A à 5C illustrent les résultats d'une analyse de discrimination par forme d'impulsion d'un scintillateur plastique chargé en 2-méthylbutyrate de lithium à hauteur de 2,43% massiques, après irradiation au californium-252 ; la figure 5A correspond au diagramme biparamétrique représentant le rapport de la charge de traine sur la charge totale, noté $Q_{tail}/Q_{total}$, en fonction de la charge totale, notée $O_{total}$; la figure 5B correspond à l'histogramme du rapport de charges, $Q_{tail}/Q_{total}$, obtenu par projection du diagramme de la figure 5A sur l'axe des ordonnées, tandis que la figure 5C correspond à l'histogramme en charge totale, $Q_{total}$, obtenu par projection du diagramme de la figure 5A sur l'axe des abscisses ; sur les figures 5B et 5C, est indiqué sur l'axe des ordonnées le nombre d'événements, noté $N_E$.

La figure 6 illustre les spectres de rendement de luminescence, exprimés en nombre de coups, noté $N_C$ en fonction du numéro de canal, noté #C, tels qu'obtenus pour trois scintillateurs plastiques chargés en tri(2-méthylbutyrate) de bismuth, respectivement à hauteur de 15 % massiques (spectre S2), 30 % massiques (spectre S3) et 45 % massiques (spectre S4) et, à titre de comparaison, pour un scintillateur plastique commercial de référence (spectre R), après irradiation au césium-137.

La figure 7 est une figure analogue à la figure 6 mais pour une irradiation des trois scintillateurs plastiques à l'américium-241.

La figure 8 illustre les taux de comptage, exprimés en nombre de coups, noté $N_C$, associés aux pics photo-électriques des quatre scintillateurs plastiques dont les spectres de rendement de luminescence après irradiation à l'américium-241 sont représentés sur la figure 7, ces taux de comptage ayant été obtenus par intégration d'un ajustement gaussien (ou fit) de ces spectres.

## EXPOSÉ DÉTAILLÉ DE MODES DE RÉALISATION PARTICULIERS

Dans ce qui précède et ce qui suit :

- le pourcentage massique d'un métal M dans un carboxylate C, noté $\%_m M$, correspond au rapport de la masse molaire, notée $m_m(M)$ et exprimée en g/mol, du métal M sur la masse molaire du carboxylate C, notée $m_m(C)$ et exprimée en g/mol, multiplié par 100 ; autrement dit :

$$\%_m M = \frac{m_m(M)}{m_m(C)} \times 100$$

- le maximum de solubilité d'un métal M dans un milieu apolaire A, noté $\%_m M_{max,sol}$, correspond au rapport de la masse maximale, notée $m(M)_{max}$ et exprimée en g, de métal M solubilisé sur la masse totale du milieu apolaire A, notée m(A) et exprimée en g, multiplié par 100 ; autrement dit :

$$\%_m M_{max,sol} = \frac{m(M)_{max}}{m(A)} \times 100$$

## I - Synthèse de 2-méthylbutyrates métalliques et mise en évidence de leur solubilité en milieux apolaires

### I.1 - 2-méthylbutyrate de lithium

Les propriétés exceptionnelles de solubilité du 2-méthylbutyrate de lithium en milieu apolaire sont mises en évidence en synthétisant les 16 carboxylates de lithium A à P qui sont répertoriés dans le tableau I ci-après - dont le 2-méthylbutyrate de lithium - et en soumettant ces carboxylates à des tests de solubilité dans un mélange comprenant du styrène et de l'acide méthacrylique (représentatif d'un mélange classiquement utilisé pour former la matrice polymère d'un scintillateur plastique) dans un rapport volumique de 8/2 à 60 °C.

Les carboxylates de lithium sont synthétisés selon le schéma réactionnel suivant :

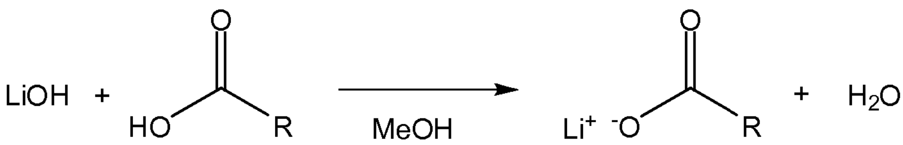


1 2

Pour ce faire, du lithium-6 sous la forme $^{6}LiOH{\bullet}H_2O$ (5 g - 119 mmol) est dissous dans du méthanol (50 mL) à température ambiante. Chaque acide carboxylique noté **1** est ajouté de façon équimolaire, progressivement sous agitation. Les mélanges réactionnels sont ensuite concentrés par évaporation sous vide à 45 °C. Les carboxylates de lithium issus de la réaction et notés **2** sont précipités par ajout d'acétone ou d'éther éthylique, filtrés sous Büchner, puis séchés sous vide à 60 °C pendant 12 heures.

Dans le tableau I ci-après, sont indiqués, pour chacun des carboxylates de lithium A à P synthétisés, sa formule développée, son nom, sa masse molaire, exprimée en g, ainsi que le pourcentage massique de lithium dans ce carboxylate, noté $\%_mLi$.

Il est à noter que le 2-méthylbutyrate de lithium correspond au carboxylate F du tableau I.

Tableau I

| | **Carboxylate** | **Masse molaire** (g/mol) | $\%_m$**Li** |
|---|---|---|---|
| A | 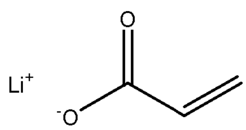 acrylate de lithium | 78 | 8,90 |
| B | 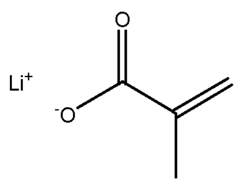 méthacrylate de lithium | 92 | 7,54 |
| C | 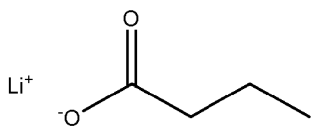 butyrate de lithium | 94,1 | 7,38 |

(suite)

| | Carboxylate | **Masse molaire** (g/mol) | $\%_m$Li |
|---|---|---|---|
| D | 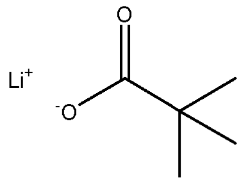 pivalate de lithium | 108 | 6,43 |
| E | 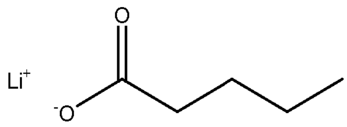 pentanoate de lithium | 108 | 6,43 |
| F | 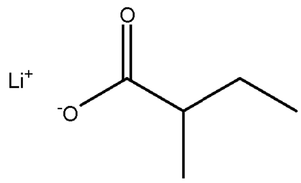 **2-méthylbutyrate de lithium** | 108 | 6,43 |
| G | 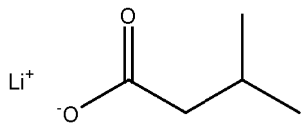 3-méthylbutyrate de lithium | 108 | 6,43 |
| H | 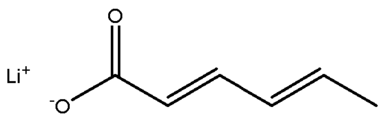 sorbate de lithium | 118 | 5,88 |
| I | 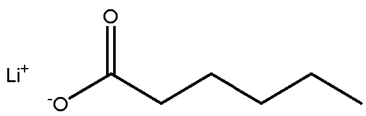 hexanoate de lithium | 122,1 | 5,68 |
| J | 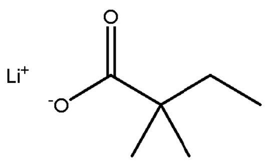 2,2-diméthylbutyrate de lithium | 122,1 | 5,68 |
| K | 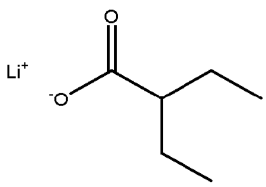 2-éthylbutyrate de lithium | 122,1 | 5,68 |

(suite)

| | Carboxylate | **Masse molaire** (g/mol) | **%$_m$Li** |
|---|---|---|---|
| L | 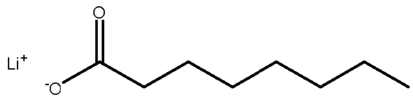 octanoate de lithium | 150 | 4,63 |
| M | 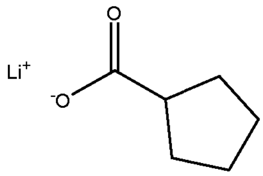 cyclopentanoate de lithium | 120,1 | 5,78 |
| N | 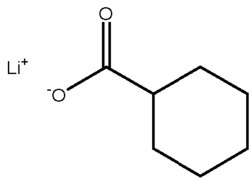 cyclohexanoate de lithium | 134,2 | 5,17 |
| O | 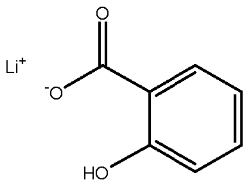 salicylate de lithium | 144 | 4,82 |
| P | 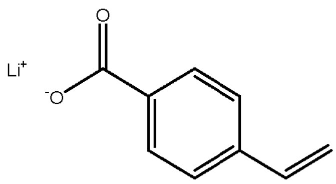 4-vinylbenzoate de lithium | 154 | 4,51 |

Les tests de solubilité sont réalisés en solubilisant des quantités croissantes de carboxylates métalliques dans le mélange styrène/acide méthacrylique à la température de 60 °C. La limite de solubilité est atteinte lorsque le dernier ajout de carboxylate métallique ne se solubilise pas et reste en suspension.

Les résultats de ces tests sont illustrés sur la figure 1 qui indique, pour chacun des carboxylates de lithium A à P, le maximum de solubilité du lithium, noté %$_m$Li$_{max,sol,}$ obtenu.

Comme le montre cette figure, les solubilités des carboxylates de lithium peuvent être classées dans l'ordre croissant suivant : vinylbenzoate < sorbate < acrylate < salicylate < méthacrylate < octanoate < pivalate < butyrate < 3-méthylbutyrate < pentanoate < hexanoate < 2-éthylbutyrate < 2,2-diméthylbutyrate < cyclopentanoate < cyclohexanoate « 2-méthylbutyrate.

Ainsi, le 2-méthylbutyrate de lithium est, de tous les carboxylates de lithium A à P, celui qui présente la solubilité la plus élevée dans un mélange de styrène et d'acide méthacrylique 8/2, v/v.

Cette solubilité est également notablement plus élevée que celle des carboxylates de lithium de la littérature. Ainsi, elle est :

- 5,6 fois supérieure à celle du méthacrylate de lithium proposé dans la référence **[1]** ;
- 8,3 fois supérieure à celle du salicylate de lithium proposé dans la référence **[2]** ; et
- 3,4 fois supérieure à celle du pivalate de lithium proposé par Cherepy *et al.* dans les références **[3]** et **[4].**

De plus, le 2-méthylbutyrate de lithium présente une masse molaire relativement faible (108 g/mol) permettant de ne pas diluer « massiquement » le lithium autour de sa copule organique contrairement au salicylate de lithium et au 3-phénylsalicylate de lithium proposés dans la référence **[2].**

Il est à noter que la solubilité remarquable du 2-méthylbutyrate de lithium en milieu apolaire non seulement ne pouvait pas être déduite de la littérature mais elle ne pouvait pas non plus être anticipée théoriquement, que soit par des calculs prédictifs de logP (ou « *Log Kow* ») ou des paramètres de solubilité de Hansen.

I.2 -Tri(2-méthylbutyrate) de bismuth

Les propriétés exceptionnelles de solubilité du tri(2-méthylbutyrate) de bismuth en milieu apolaires sont mises en évidence en synthétisant ce tricarboxylate ainsi que le tripivalate de bismuth, connu à ce jour pour être le tricarboxylate de bismuth permettant d'atteindre les plus hauts taux de solubilité du bismuth dans les matrices de scintillateurs plastiques (voir références **[3]** et **[4]),** et en soumettant les deux tricarboxylates ainsi obtenus à des tests de solubilité dans du styrène à température ambiante (i.e. 20 °C-25°C).

Les deux tricarboxylates sont synthétisés selon le schéma réactionnel suivant :

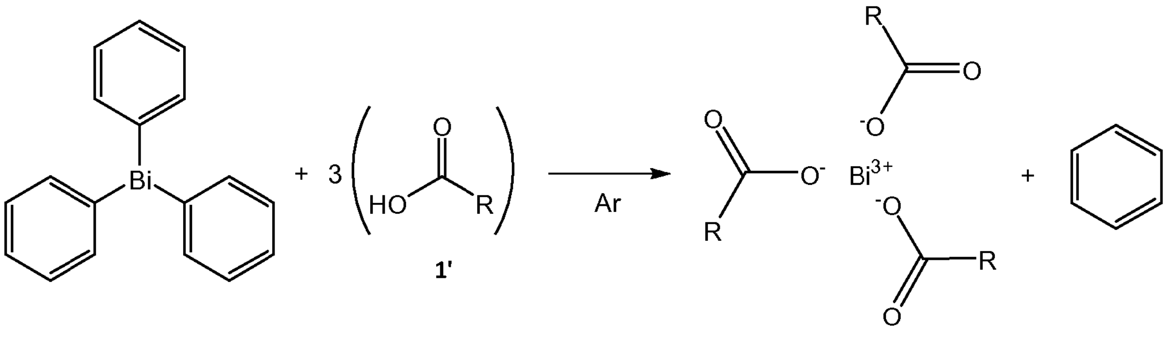


1'

2'

Pour ce faire, le triphénylbismuth (9 g - 20,4 mmol) et chaque acide carboxylique noté **1'** (3 équivalents) sont placés dans un flacon scellé, préalablement saturé en argon par bullage. Les mélanges sont ensuite chauffés à 100 °C pendant 30 minutes. Les tricarboxylates issus de la réaction et notés **2'** sont ensuite obtenus après séchage sous vide.

Dans le tableau II ci-après, sont indiqués, pour chacun des deux tricarboxylates de bismuth synthétisés, sa formule développée, son nom, sa masse molaire, ainsi que le pourcentage massique de bismuth dans ce carboxylate, noté $\%_m$Bi.

Tableau II

| | **Tricarboxylate** | **Masse molaire** (g/mol) | **$\%_m$Bi** |
|---|---|---|---|
| A | 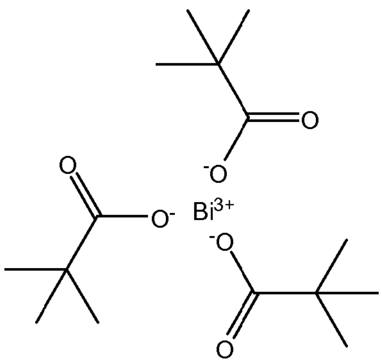 Tripivalate de bismuth | 512,37 | 40,79 |

(suite)

| | Tricarboxylate | Masse molaire (g/mol) | $\%_m$Bi |
|---|---|---|---|
| B | 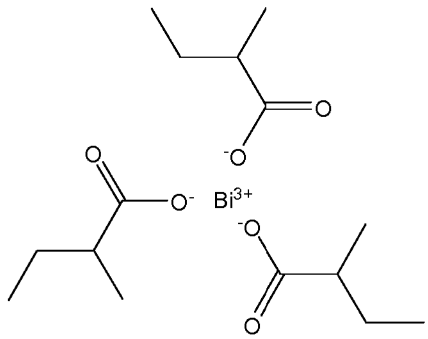 Tri(2-méthylbutyrate) de bismuth | 512,37 | 40,79 |

Les tests de solubilité sont réalisés selon un protocole opératoire analogue à celui décrit au point I.1 ci-avant.

Les résultats de ces tests sont illustrés sur la figure 2 qui indique, pour chacun de deux tricarboxylates de bismuth, le maximum de solubilité du bismuth, noté $\%_m Bi_{max,sol,}$ obtenu dans le styrène à température ambiante. Sur cette figure, la barre A correspond au tripivalate de bismuth tandis que la barre B correspond au tri(2-méthylbutyrate) de bismuth.

Cette figure montre que le maximum de solubilité du tri(2-méthylbutyrate) de bismuth est de l'ordre de 4,8 fois supérieur à celui du tripivalate de bismuth.

I.3 -Tri(2-méthylbutyrate) de gadolinium

Du tri(2-méthylbutyrate) de gadolinium, de formule :

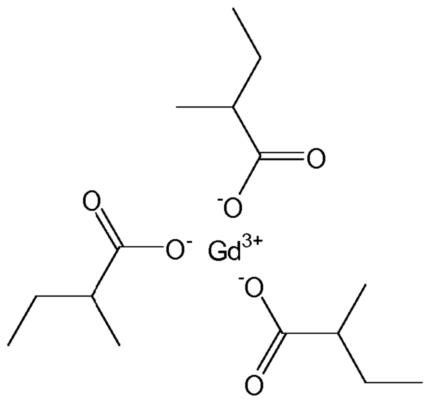

est synthétisé et sa solubilité est testée dans du styrène à 20 °C, 60 °C et 110 °C.

Pour ce faire, 3,62 g de $Gd_2O_3$ (10 mmol) et 12,2 g d'acide 2-méthylbutyrique (120 mmol) sont placés dans un ballon de 250 mL. Le mélange est mis à chauffer sans solvant et sous agitation magnétique à 140°C pendant 24 heures. La solution visqueuse résultante est refroidie à température ambiante, puis dissoute dans 50 mL d'éther diéthylique à l'aide d'un bain à ultrasons pendant 2 heures. 50 mL d'éthanol sont ajoutés sous agitation, ce qui conduit à la formation d'un précipité blanc. Après filtration sur un verre fritté et lavage avec 25 mL d'une solution éther/éthanol (1/1, v/v), le précipité est séché sous vide. Le tri(2-méthylbutyrate) de gadolinium est ainsi isolé avec un rendement de 94 % (8,69 g, 18,9 mmol).

Le tri(2-méthylbutyrate) de gadolinium présente une masse molaire de 461,10 g/mol et un pourcentage massique de gadolinium de 34,25$\%_m$Gd.

Les tests de solubilité sont réalisés selon un protocole opératoire analogue à celui décrit au point I.1 ci-avant.

Les résultats de ces tests sont illustrés sur la figure 3 qui indique, les maxima de solubilité du gadolinium obtenus, notés $\%_m Gd_{max,sol,}$ respectivement à 20°C, à 60° C et à 110 °C.

I.4 - Di(2-méthylbutyrate) de plomb

Du di(2-méthylbutyrate) de plomb, de formule (Ic) ci-avant est synthétisé et sa solubilité est testée dans du styrène et du toluène à température ambiante.

Pour ce faire, 2,23 g de PbO (10 mmol) et 3,07 g d'acide 2-méthylbutyrique (30 mmol) sont placés dans un ballon de 50 mL. Le mélange est mis à chauffer à reflux à 140 °C sous agitation magnétique pendant 24 heures. La solution visqueuse résultante est ensuite refroidie à température ambiante, puis distillée sous vide avec un palier à 100 °C et un palier à 187 °C pour évacuer l'eau et l'excès d'acide. Après refroidissement, on obtient ainsi le di(2-méthylbutyrate) de plomb sous forme d'une huile visqueuse transparente.

Le di(2-méthylbutyrate) de plomb présente une masse molaire de 410,10 g/mol et un pourcentage massique de plomb, $\%_m$Pb, de 50,71$\%_m$Pb.

Ce composé s'avère être totalement miscible dans le styrène et le toluène à température ambiante. Aucun point de précipitation n'est détecté.

Il est à noter que le di(2-méthylbutyrate) de plomb présente une température de fusion entre 20° C - 25° C et est donc parfaitement liquide à température ambiante.

**II - Préparation et caractérisation photophysique des scintillateurs plastiques de l'invention**

II.1- Scintillateur plastique chargé en 2-méthylbutyrate de lithium

* *Préparation* :

On prépare un scintillateur plastique - ci-après scintillateur S1 - chargé en 2-méthylbutyrate de lithium à partir de la composition suivante :

- 72,8 % massiques de styrène,
- 8,09 % massiques d'acide méthacrylique,
- 2,43 % massiques de 2-méthylbutyrate de lithium enrichi à 95% massiques de lithium-6, soit 0,16 % massique de lithium,
- 16,66 % massiques de 2,5-diphényloxazole (ou PPO) en tant que fluorophore primaire, et
- 0,02 % massique de 1,4-bis(5-phényl-2-oxazolyl)benzène (ou POPOP) en tant que fluorophore secondaire.

Pour ce faire, le 2-méthylbutyrate de lithium (0,437 g), le PPO (3 g) et le POPOP (0,0045 g) sont introduits dans un ballon rodé auquel sont ensuite ajoutés le styrène (14,5 mL) et l'acide méthacrylique (1,4 mL). Une fois le mélange homogénéisé, celui-ci subit 5 cycles de lyophilisations/dégazages successifs (congélation à l'azote liquide sous vide, puis redescente à température ambiante). Le retour à la pression atmosphérique est réalisé sous argon. Le mélange est ensuite transféré dans un moule, préalablement nettoyé et chauffé à 110 °C pour enlever toutes les impuretés et les traces d'humidité. Le moule, une fois rempli est scellé, soumis à un dernier bullage d'argon puis placé en étuve pour initier la polymérisation radicalaire du styrène et de l'acide méthacrylique par voie thermique, à 110 °C pendant 4 heures puis à 80 °C durant 2 semaines. Après quoi, le moule est ramené à la température ambiante. Son contenu est libéré par pression mécanique, puis usiné et poli pour obtenir le scintillateur S1 sous la forme d'un cylindre à la surface la plus lisse possible.

* *Caractérisation photophysique* :

Le scintillateur S1 est soumis à des analyses de rendement de luminescence et de PSD.

Ces deux techniques de caractérisations sont réalisées selon des chaines d'acquisitions similaires. En premier lieu, intervient l'irradiation du scintillateur plastique par une source émettant des rayons γ de type $^{137}$Césium pour le rendement de luminescence et par une source émettant à la fois des neutrons et des rayons γ de type $^{252}$Californium pour la PSD. Suite à cette irradiation, des photons de scintillation sont créés au sein du scintillateur puis collectés, amplifiés et convertis en impulsions électroniques par le photomultiplicateur (PM). Ces impulsions sont ensuite numérisées en signaux numériques par des appareils d'électronique de mesure (carte électronique programmable dédiée ou numériseur commercial). Finalement, les signaux numériques subissent des algorithmes de traitement du signal, qui eux, sont spécifiques de la méthode de caractérisation.

Pour le rendement de luminescence, le signal est analysé par un analyseur multi-canaux (ou MCA pour « ***M****ulti* ***C****hannel* ***A****nalyzer* ») permettant de collecter l'amplitude maximale de chaque impulsion et de classer ces amplitudes dans un histogramme qui constitue alors le spectre γ des interactions entre les rayons γ et le scintillateur. Ce spectre γ est alors communément comparé à celui d'un scintillateur plastique commercial de référence comme l'EJ-200 d'Eljen

Technology.

La PSD repose, quant à elle, sur la différence entre l'interaction *n*/scintillateur et y/scintillateur, résultant en une forme d'impulsion plus large pour l'interaction *n*/scintillateur (selon la théorie de Voltz et Laustriat). On peut ainsi tracer un diagramme biparamétrique représentant le quotient de la charge de traine, noté $Q_{tail}$, correspondant à la fin de l'impulsion sur la charge totale, notée $Q_{total}$, correspondant à la totalité de l'impulsion en fonction de la charge totale $Q_{total}$. Ce diagramme biparamétrique permet de faire émerger des zones de regroupement des impulsions issues d'interactions $n_{\text{rapides ou thermiques}}$/scintillateur (lobe du haut pour les neutrons rapides et ovale concentré au-dessus de ce lobe pour neutrons thermiques) et y/scintillateur (lobe du bas).

Différentes projections en histogrammes peuvent alors découler du diagramme biparamétrique comme :

- l'histogramme du rapport de charges $Q_{tail}/Q_{total}$ par projection de ce diagramme sur l'axe des ordonnées, ce qui permet d'accéder par ajustement gaussien au facteur de mérite (FoM), et
- l'histogramme en charge totale, $Q_{total}$, par projection de ce diagramme sur l'axe des abscisses.

Le spectre $\gamma$ obtenu pour le scintillateur S1 après irradiation au césium-137 est illustré sur la figure 4 (spectre S1) qui illustre également, à titre de comparaison, le spectre y du scintillateur EJ-200 de référence (spectre R).

Comme le montre cette figure, le rendement de luminescence du scintillateur S1 est sensiblement égal à 78 % de celui du scintillateur EJ-200, ce qui en fait un rendement de luminescence élevé.

Les résultats de l'analyse PSD du scintillateur S1 sont, eux, illustrés sur les figures 5A à 5C, la figure 5A correspondant au diagramme bi-paramétrique, la figure 5B correspondant à l'histogramme du rapport de charges, $Q._{tail}/Q_{total}$, obtenu par projection de ce diagramme sur l'axe des ordonnées pour $Q_{total}$ compris entre 3 et 15, et la figure 5C correspondant à l'histogramme en charge totale, $Q_{total}$, obtenu par projection de ce diagramme sur l'axe des abscisses.

Comme le montrent ces figures, le scintillateur S1 présente une excellente aptitude à discriminer les neutrons thermiques, les neutrons rapides et les rayons y avec un FoM ($\gamma/n_{thermiques}$) de 1,75 et un FoM ($\gamma/n_{rapides}$) de 0,83.

II.2 - <u>Scintillateurs plastiques chargés en tri(2-méthylbutyrate) de bismuth</u>

* *<u>Préparation</u> :*

On prépare trois scintillateurs plastiques - ci-après scintillateurs S2, S3 et S4 - chargés en tri(2-méthylbutyrate) de bismuth, respectivement à hauteur de 15 % massiques, 30 % massiques et 45 % massiques, à partir des compositions présentées dans le tableau III suivant.

Tableau III

| | | S2 | S3 | S4 |
|---|---|---|---|---|
| % massiques | Styrène | 82,5 | 67,94 | 53,38 |
| | Tri(2-méthylbutyrate) de bismuth | 14,56 (soit 6,1 % massiques de Bi) | 29,12 (soit 12,2 % massiques de Bi) | 43,68 (soit 18,4 % massiques de Bi) |
| | PPO | 2,91 | 2,91 | 2,91 |
| | POPOP | 0,03 | 0,03 | 0,03 |

Pour ce faire, le tri(2-méthylbutyrate) de bismuth (respectivement 1,5 g, 3 g et 4,5 g), le PPO (0,3 g) et le POPOP (0,003 g) est introduit dans un ballon rodé auquel est ajouté ensuite le styrène (respectivement 8,850 mL, 7,725 mL et 5,5 mL). Une fois les mélanges homogénéisés, ceux-ci subissent 5 cycles de lyophilisations/dégazages successives (congélation à l'azote liquide sous vide, puis redescente à température ambiante). Le retour à la pression atmosphérique est réalisé sous argon. Les mélanges sont ensuite transférés dans des moules, préalablement nettoyés et chauffés à 110 °C pour enlever toutes les impuretés et les traces d'humidité. Les moules, une fois remplis sont scellés, soumis à un dernier bullage d'argon puis placés en étuve pour initier la polymérisation radicalaire du styrène par voie thermique, à 45 °C pendant 2 mois. Après quoi, les moules sont ramenés à la température ambiante. Leur contenu est libéré par pression mécanique, puis usiné et poli pour obtenir les scintillateurs S2, S3 et S4 sous la forme de cylindres aux surfaces les plus lisses possibles.

* *Caractérisation photophysique :*

Les scintillateurs S2, S3 et S4 sont soumis à des analyses de rendement de luminescence avec, d'une part, une irradiation par une source de $^{137}$Césium émettrice de rayons γ à 662 keV et, d'autre part, une source de $^{241}$américium émettrice de rayons γ à 59 keV. Les spectres de rendement de luminescence sont établis comme décrit au point II.1 ci-avant et, là également, comparés à ceux obtenus au scintillateur EJ-200.

Ces spectres sont illustrés sur les figures 6 et 7, la figure 6 correspondant aux spectres obtenus après irradiation au césium-137 et la figure 7 correspondant aux spectres obtenus après irradiation à l'américium-241. Sur chacune de ces figures, les spectres S2, S3 et S4 correspondent respectivement aux scintillateurs S2, S3 et S4 tandis que le spectre R correspond au spectre du scintillateur EJ-200.

Comme le montre la figure 6, les rendements de luminescence obtenus pour les scintillateurs S1, S2 et S3 après irradiation au césium-137 sont sensiblement plus faibles (≤ 1000 photons par MeV) que celui obtenu pour le scintillateur EJ-200 de référence.

Par ailleurs, comme le montrent les figures 7 et 8, l'utilisation d'un fort dopage en ions bismuth permet d'augmenter la proportion de l'effet photo-électrique (c'est-à-dire l'absorption totale des rayons γ par les scintillateurs). L'effet est moins prononcé qu'avec d'autres dopages. Néanmoins, les scintillateurs S2 et S3 présentent une augmentation de 100% de l'effet photo-électrique par rapport à un scintillateur plastique non dopé comme l'EJ-200.

II.3 - Scintillateur plastique chargé en tri(2-méthylbutyrate) de gadolinium

On prépare un scintillateur plastique - ci-après scintillateur S5 - chargé en tri(2-méthylbutyrate) de gadolinium à partir de la composition suivante :

- 75,17 % massiques de styrène,
- 18,87 % massiques de diméthacrylate de butane-1,4-diyle,
- 2,93 % massiques de tri(2-méthylbutyrate) de gadolinium, soit 1 % massique de gadolinium,
- 3 % massiques de PPO, et
- 0,03 % massique de POPOP.

Pour ce faire, on mélange, dans un moule cylindrique préalablement nettoyé et séché à 110 °C pour enlever toutes les impuretés et les traces d'humidité, 293 mg de tri(2-méthylbutyrate) de gadolinium, 3 mg de POPOP, 288 mg de PPO, 1,84 mL de diméthacrylate de butane-1,4-diyle et 8,29 mL de styrène. Le mélange obtenu est dégazé par bullage d'argon pendant 5 min, puis le moule est scellé sous argon. Il est ensuite chauffé jusqu'à dissolution des composants puis placé dans une étuve pour initier la polymérisation radicalaire réticulante du styrène, à 120°C pendant 7 jours. Le contenu du moule est ensuite récupéré en brisant ce moule, puis il est découpé et poli pour obtenir le scintillateur S5.

II.4 - Scintillateur plastique chargé en di(2-méthylbutyrate) de plomb

On prépare un scintillateur plastique - ci-après scintillateur S6 - chargé en di(2-méthylbutyrate) de plomb à partir de la composition suivante :

- 75,83 % massiques de styrène,
- 19,16 % massiques de diméthacrylate de butane-1,4-diyle,
- 1,98% massiques de di(2-méthylbutyrate) de plomb, soit 1 % massique de plomb,
- 3 % massiques de PPO, et
- 0,03 % massique de POPOP.

Ce scintillateur est obtenu comme décrit au point II.3 ci-avant à ceci près que le mélange qui est versé dans le moule comprend 198 mg de di(2-méthylbutyrate) de plomb, 3 mg de POPOP, 288 mg de PPO, 1,86 mL de diméthacrylate de butane-1,4-diyle et 8,37 mL de styrène et que le moule est placé dans une étuve à 80°C pendant 7 jours.

**RÉFÉRENCES CITÉES**

**[1]** Breukers et al., Nucl. Instruments Methods Phys. Res. Sect. A Accel. Spectrometers, Detect. Assoc. Equip. 2013, 701, 58-61

**[2]** Mabe et al., Nucl. Instruments Methods Phys. Res. Sect. A Accel. Spectrometers, Detect. Assoc. Equip. 2016, 806, 80-86
**[3]** Cherepy et al., Nucl. Instruments Methods Phys. Res. Sect. A Accel. Spectrometers, Detect. Assoc. Equip. 2015, 778, 126-132
**[4]** US 9,234,968
**[5]** Kissa, J. Coll. Sci. 1962, 857-864
[6] Kissa, J. Coll. Sci. 1964, 279-289
**[7]** Rohwer et Martin, J. Lumin. 2005, 115(3-4), 77-90
**[8]** Velapoli et Mielenz, Appl. Opt. 1981, 20(9), 1718

**Revendications**

1. Scintillateur plastique, comprenant une matrice polymère dans laquelle sont inclus au moins un fluorophore et au moins un carboxylate métallique, **caractérisé en ce que** le carboxylate métallique est un 2-méthylbutyrate métallique de formule (I) :

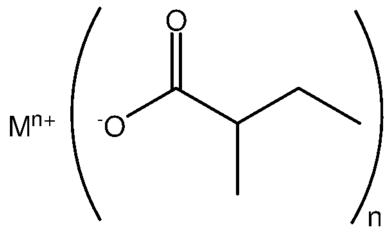 (I)

dans laquelle M représente un métal choisi parmi le lithium, le gadolinium, le bismuth, le plomb, le cadmium, l'étain, le tungstène, le mercure et l'osmium et n correspond au degré d'oxydation du métal M.

2. Scintillateur plastique selon la revendication 1, dans lequel le métal M est le lithium, le gadolinium, le bismuth ou le plomb.

3. Scintillateur plastique selon la revendication 2, dans lequel le 2-méthylbutyrate métallique répond à l'une quelconque des formules (Ia), (Ib) et (Ic) :

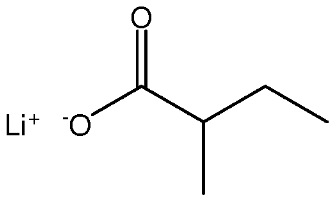 (Ia)

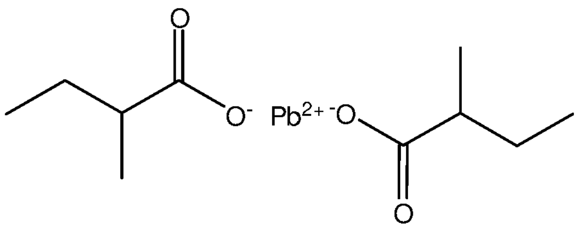 (Ic)

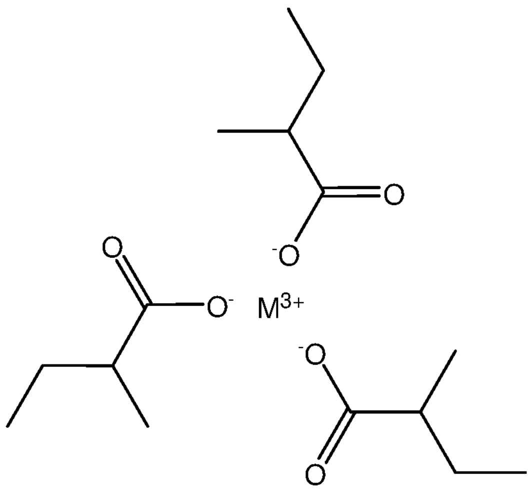

(Ib) avec M = Gd ou Bi

**4.** Scintillateur plastique selon l'une quelconque des revendications 1 à 3, dans lequel la matrice polymère comprend un polymère résultant d'une polymérisation radicalaire d'au moins un composé polymérisable comprenant au moins un groupe vinyle, allyle ou 1-méthyléthényle.

**5.** Scintillateur plastique selon l'une quelconque des revendications 1 à 3, dans lequel la matrice polymère comprend un polymère résultant d'une polymérisation radicalaire réticulante d'au moins un composé polymérisable comprenant au moins un groupe vinyle, allyle ou 1-méthyléthényle, en présence d'un agent de réticulation.

**6.** Scintillateur plastique selon la revendication 4 ou la revendication 5, dans lequel le composé polymérisable comprend au moins un cycle aromatique.

**7.** Scintillateur plastique selon la revendication 6, dans lequel le composé polymérisable est le styrène, un isomère du méthylstyrène, un isomère du diméthylstyrène, un isomère du vinylbiphényle, un isomère de l'allyltoluène, un isomère du vinylnaphtalène ou le *N*-vinylcarbazole.

**8.** Scintillateur plastique selon la revendication 4 ou la revendication 5, dans lequel le composé polymérisable est l'acide acrylique, l'acide méthacrylique, l'acrylamide, le méthacrylamide, un acrylate d'alkyle ou d'hydroxyalkyle comprenant un groupe alkyle, linéaire ou ramifié, en C1 à C20 ou un méthacrylate d'alkyle ou d'hydroxyalkyle comprenant un groupe alkyle, linéaire ou ramifié, en C1 à C20.

**9.** Scintillateur plastique selon l'une quelconque des revendications 5 à 8, dans lequel le polymère résulte de la polymérisation radicalaire d'un premier composé polymérisable et d'un deuxième composé polymérisable.

**10.** Scintillateur plastique selon la revendication 9, dans lequel le premier composé polymérisable est le styrène, le 2-vinyltoluène, le 3-vinyltoluène ou le 4-vinyltoluène, et le deuxième composé polymérisable est l'acide acrylique ou l'acide méthacrylique.

**11.** Scintillateur plastique selon la revendication 5, dans lequel l'agent de réticulation est un isomère du divinylbenzène, un diacrylate d'alkyle ou d'hydroxyalkyle comprenant un groupe alkyle, linéaire ou ramifié, en C2 à C20 ou un diméthacrylate d'alkyle ou d'hydroxyalkyle, linéaire ou ramifié, en C2 à C20.

**12.** Scintillateur plastique selon l'une quelconque des revendications 1 à 11, qui comprend au moins un premier fluorophore et au moins un deuxième fluorophore et dans lequel :

- le premier fluorophore présente un spectre d'absorption dont l'intensité maximale d'absorption est entre 250 nm et 340 nm, un spectre d'émission dont l'intensité maximale d'émission est entre 310 nm et 380 nm et un rendement quantique de fluorescence dans un milieu apolaire supérieur à 0,2, et
- le deuxième fluorophore est choisi parmi :

1°) les fluorophores qui présentent un spectre d'absorption dont l'intensité maximale d'absorption est entre 330 nm et 400 nm, un spectre d'émission dont l'intensité maximale d'émission est entre 380 nm et 450 nm

et un rendement quantique de fluorescence dans un milieu apolaire supérieur à 0,2 ;
2°) les fluorophores qui présentent un spectre d'absorption dont l'intensité maximale d'absorption est entre 360 nm et 400 nm, un spectre d'émission dont l'intensité maximale d'émission est entre 470 nm et 540 nm et un rendement quantique de fluorescence dans un milieu apolaire supérieur à 0,5 ; et
3°) les fluorophores qui présentent un spectre d'absorption dont l'intensité maximale d'absorption est entre 350 nm et 400 nm, un spectre d'émission dont l'intensité maximale démission est entre 560 nm et 630 nm et un rendement quantique de fluorescence dans un milieu apolaire supérieur à 0,5.

**13.** Scintillateur plastique selon l'une quelconque des revendications 1 à 12, dans lequel la masse du 2-méthylbutyrate métallique est comprise entre 0,1 % et 50 % de la masse du scintillateur plastique.

**14.** Utilisation d'un scintillateur plastique selon l'une quelconque des revendications 1 à 13 pour détecter et identifier des neutrons rapides, des neutrons thermiques et/ou des rayons gamma dans un rayonnement, ou pour identifier une signature caractéristique d'au moins un radionucléide émetteur gamma dans un rayonnement gamma.

**15.** Utilisation selon la revendication 14, dans laquelle le scintillateur plastique comprend du 2-méthylbutyrate de lithium et la détection et l'identification des neutrons rapides, des neutrons thermiques et/ou des rayons gamma dans un rayonnement comprennent de plus une discrimination de la présence des neutrons rapides, des neutrons thermiques et des rayons gamma dans le rayonnement.

**Patentansprüche**

**1.** Kunststoff-Szintillator, enthaltend eine Polymermatrix, in der zumindest ein Fluorophor und zumindest ein Metallcarboxylat enthalten sind, **dadurch gekennzeichnet, dass** das Metallcarboxylat ein metallisches 2-Methylbutyrat der Formel (I) ist:

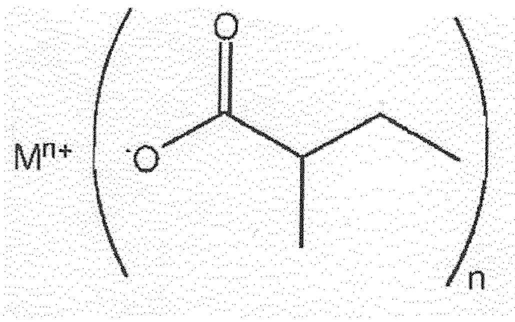
(I)

worin M ein Metall ist, ausgewählt aus Lithium, Gadolinium, Wismut, Blei, Cadmium, Zinn, Wolfram, Quecksilber und Osmium, und n die Oxidationsstufe des Metalls M ist.

**2.** Kunststoff-Szintillator nach Anspruch 1, wobei das Metall M Lithium, Gadolinium, Wismut oder Blei ist.

**3.** Kunststoff-Szintillator nach Anspruch 2, wobei das metallische 2-Methylbutyrat einer der Formeln (Ia), (Ib) und (Ic) entspricht:

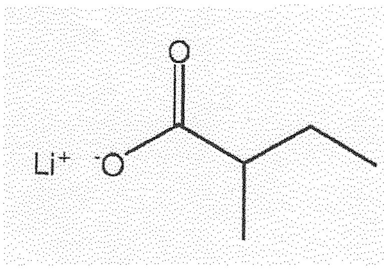
(Ia)

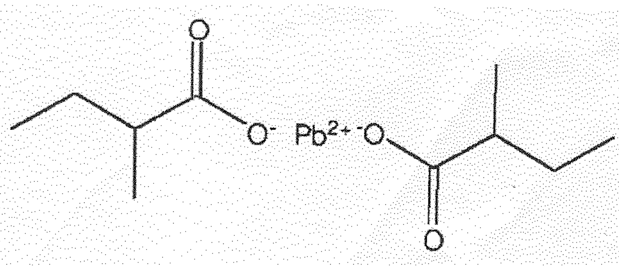
(Ic)

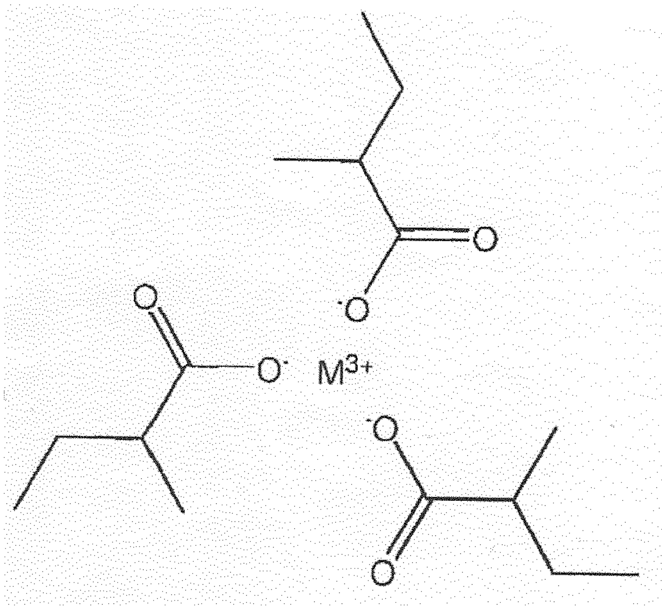

(Ib) mit M = Gd oder Bi

4. Kunststoff-Szintillator nach einem der Ansprüche 1 bis 3, wobei die Polymermatrix ein Polymer enthält, das aus der radikalischen Polymerisation von zumindest einer polymerisierbaren Verbindung resultiert, die zumindest eine Vinyl-, Allyl- oder 1-Methylethenylgruppe enthält.

5. Kunststoff-Szintillator nach einem der Ansprüche 1 bis 3, wobei die Polymermatrix ein Polymer enthält, das aus einer radikalisch vernetzenden Polymerisation von zumindest einer polymerisierbaren Verbindung, die zumindest eine Vinyl-, Allyl- oder 1-Methylethenylgruppe enthält, unter Vorhandensein eines Vernetzungsmittels resultiert.

6. Kunststoff-Szintillator nach Anspruch 4 oder Anspruch 5, wobei die polymerisierbare Verbindung zumindest einen aromatischen Ring enthält.

7. Kunststoff-Szintillator nach Anspruch 6, wobei die polymerisierbare Verbindung Styrol, ein Methylstyrol-Isomer, ein Dimethylstyrol-Isomer, ein Vinylbiphenyl-Isomer, ein Allyltoluol-Isomer, ein Vinylnaphthalin-Isomer oder N-Vinylcarbazol ist.

8. Kunststoff-Szintillator nach Anspruch 4 oder Anspruch 5, wobei die polymerisierbare Verbindung Acrylsäure, Methacrylsäure, Acrylamid, Methacrylamid, ein Alkyl- oder Hydroxyalkylacrylat mit einer linearen oder verzweigten $C_1$-$C_{20}$-Alkylgruppe oder ein Alkyl- oder Hydroxyalkylmethacrylat mit einer linearen oder verzweigten $C_1$- bis $C_{20}$-Alkylgruppe ist.

9. Kunststoff-Szintillator nach einem der Ansprüche 5 bis 8, wobei das Polymer aus der radikalischen Polymerisation einer ersten polymerisierbaren Verbindung und einer zweiten polymerisierbaren Verbindung resultiert.

10. Kunststoff-Szintillator nach Anspruch 9, wobei die erste polymerisierbare Verbindung Styrol, 2-Vinyltoluol, 3-Vinyltoluol oder 4-Vinyltoluol ist, und die zweite polymerisierbare Verbindung Acrylsäure oder Methacrylsäure ist.

11. Kunststoff-Szintillator nach Anspruch 5, wobei das Vernetzungsmittel ein Isomer von Divinylbenzol, ein Alkyl- oder Hydroxyalkyldiacrylat mit einer linearen oder verzweigten $C_2$- bis $C_{20}$-Alkylgruppe, oder ein lineares oder verzweigtes $C_2$- bis $C_{20}$-Alkyl- oder Hydroxyalkyldimethacrylat ist.

12. Kunststoff-Szintillator nach einem der Ansprüche 1 bis 11, enthaltend zumindest ein erstes Fluorophor und zumindest ein zweites Fluorophor, wobei

- das erste Fluorophor ein Absorptionsspektrum, dessen maximale Absorptionsintensität zwischen 250 nm und 340 nm liegt, ein Emissionsspektrum, dessen maximale Emissionsintensität zwischen 310 nm und 380 nm liegt, und eine Fluoreszenzquanteneffizienz in einem apolaren Medium von mehr als 0,2 aufweist, und
- das zweite Fluorophor ausgewählt ist aus:

1°) Fluorophoren, die ein Absorptionsspektrum, dessen maximale Absorptionsintensität zwischen 330 nm und 400 nm liegt, ein Emissionsspektrum, dessen maximale Emissionsintensität zwischen 380 nm und 450 nm liegt, und eine Fluoreszenzquanteneffizienz in einem apolaren Medium von mehr als 0,2 aufweisen;
2°) Fluorophoren, die ein Absorptionsspektrum mit einer maximalen Absorptionsintensität zwischen 360 nm und 400 nm, ein Emissionsspektrum mit einer maximalen Emissionsintensität zwischen 470 nm und 540 nm und eine Fluoreszenzquanteneffizienz in einem apolaren Medium von mehr als 0,5 aufweisen; und
3°) Fluorophoren, die ein Absorptionsspektrum mit einer maximalen Absorptionsintensität zwischen 350 nm und 400 nm, ein Emissionsspektrum mit einer maximalen Emissionsintensität zwischen 560 nm und 630 nm und eine Fluoreszenzquanteneffizienz in einem apolaren Medium von mehr als 0,5 aufweisen.

**13.** Kunststoff-Szintillator nach einem der Ansprüche 1 bis 12, wobei die Masse des metallischen 2-Methylbutyrats zwischen 0,1 % und 50 % der Masse des Kunststoff-Szintillators beträgt.

**14.** Verwendung eines Kunststoff-Szintillators nach einem der Ansprüche 1 bis 13 zum Nachweis und zur Identifizierung von schnellen Neutronen, thermischen Neutronen und/oder Gammastrahlen in einer Strahlung oder zur Identifizierung einer charakteristischen Signatur zumindest eines gammastrahlenemittierenden Radionuklids in einer Gammastrahlung.

**15.** Verwendung nach Anspruch 14, wobei der Kunststoff-Szintillator Lithium-2-methylbutyrat enthält und der Nachweis und die Identifizierung von schnellen Neutronen, thermischen Neutronen und/oder Gammastrahlen in einer Strahlung ferner die Unterscheidung des Vorhandenseins von schnellen Neutronen, thermischen Neutronen und Gammastrahlen in der Strahlung umfasst.

## Claims

**1.** Plastic scintillator, comprising a polymer matrix wherein at least one fluorophore and at least one metal carboxylate are included, **characterised in that** the metal carboxylate is a metal 2-methylbutyrate of formula (I):

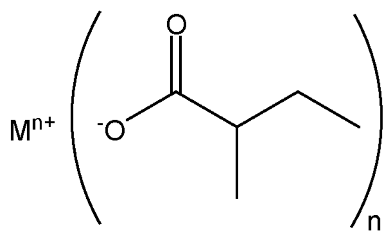

wherein M represents a metal selected from lithium gadolinium, bismuth, lead, cadmium, tin, tungsten, mercury and osmium and n corresponds to the degree of oxidation of the metal M.

**2.** Plastic scintillator according to claim 1, wherein the metal M is lithium, gadolinium, bismuth or lead.

**3.** Plastic scintillator according to claim 2, wherein the metal 2-methylbutyrate complies with any one of the formulas (Ia), (Ib) and (Ic):

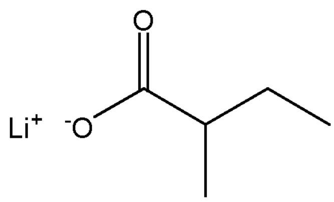

(Ia) ......

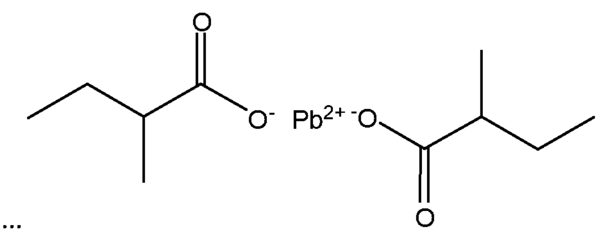

(Ic)

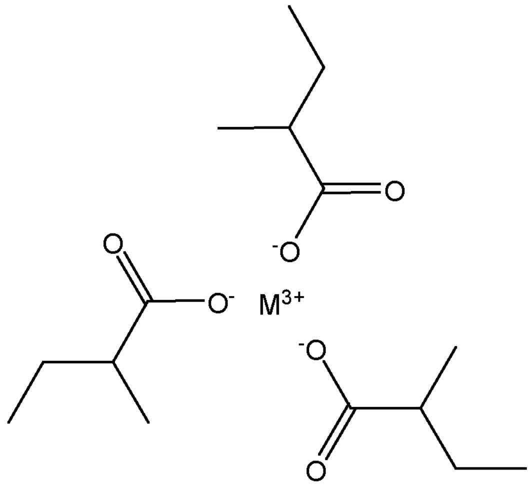

..(Ib) where M = Gd or Bi

4. Plastic scintillator according to any one of claims 1 to 3, wherein the polymer matrix comprises a polymer resulting from a radical polymerisation of at least one polymerisable compound comprising at least one vinyl, allyl or 1-methylethenyl group.

5. Plastic scintillator according to any one of claims 1 to 3, wherein the polymer matrix comprises a polymer resulting from a crosslinking radical polymerisation of at least one polymerisable compound comprising at least one vinyl, allyl or 1-methylethenyl group, in the presence of a crosslinking agent.

6. Plastic scintillator according to claim 4 or claim 5, wherein the polymerisable compound comprises at least one aromatic ring.

7. Plastic scintillator according to claim 6, wherein the polymerisable compound is styrene, an isomer of methylstyrene, an isomer of dimethylstyrene, an isomer of vinylbiphenyl, an isomer of allyltoluene, an isomer of vinylnaphthalene, or N-vinylcarbazole.

8. Plastic scintillator according to claim 4 or claim 5, wherein the polymerisable compound is acrylic acid, methacrylic acid, acrylamide, methacrylamide, an alkyl or hydroxyalkyl acrylate comprising a linear or branched, C1 to C20 alkyl group, or an alkyl or hydroxyalkyl methacrylate comprising a linear or branched, C1 to C20 alkyl group.

9. Plastic scintillator according to any one of claims 5 to 8, wherein the polymer results from the radical polymerisation of a first polymerisable compound and a second polymerisable compound.

10. Plastic scintillator according to claim 9, wherein the first polymerisable compound is styrene, 2-vinyltoluene, 3-vinyltoluene or 4-vinyltoluene, and the second polymerisable compound is acrylic acid or methacrylic acid.

11. Plastic scintillator according to claim 5, wherein the crosslinking agent is an isomer of divinylbenzene, an alkyl or hydroxyalkyl diacrylate comprising a linear or branched, C2 to C20 alkyl group, or an alkyl or hydroxyalkyl dimethacrylate comprising a linear or branched, C2 to C20 alkyl group.

12. Plastic scintillator according to any one of claims 1 to 11, which comprises at least a first fluorophore and at least a second fluorophore and wherein:

- the first fluorophore has an absorption spectrum wherein the maximum absorption intensity is between 250 nm and 340 nm, an emission spectrum wherein the maximum emission intensity is between 310 nm and 380 nm and a fluorescence quantum efficiency in a non-polar medium greater than 0.2, and
- the second fluorophore is selected from:

1) fluorophores which have an absorption spectrum wherein the maximum absorption spectrum is between 330 nm and 400 nm, an emission spectrum wherein the maximum emission intensity is between 380 nm and 450 nm and a fluorescence quantum yield in a non-polar medium greater than 0.2;
2) fluorophores which have an absorption spectrum wherein the maximum absorption spectrum is between

360 nm and 400 nm, an emission spectrum wherein the maximum emission intensity is between 470 nm and 540 nm and a fluorescence quantum yield in a non-polar medium greater than 0.5; and
3) fluorophores which have an absorption spectrum wherein the maximum absorption spectrum is between 350 nm and 400 nm, an emission spectrum wherein the maximum emission intensity is between 560 nm and 630 nm and a fluorescence quantum yield in a non-polar medium greater than 0.5.

**13.** Plastic scintillator according to any one of claims 1 to 12, wherein the mass of the metal 2-methylbutyrate is between 0.1% and 50% of the mass of the plastic scintillator.

**14.** Use of a plastic scintillator according to any one of claims 1 to 13 for detecting and identifying fast neutrons, thermal neutrons and/or gamma rays in a radiation, or for identifying a characteristic signature of at least one gamma-emitting radionuclide in a gamma radiation.

**15.** Use according to claim 14, wherein the plastic scintillator comprises lithium 2-methylbutyrate and the detection and identification of fast neutrons, thermal neutrons and/or gamma rays in a radiation further comprise a discrimination of the presence of fast neutrons, thermal neutrons and gamma rays in the radiation.

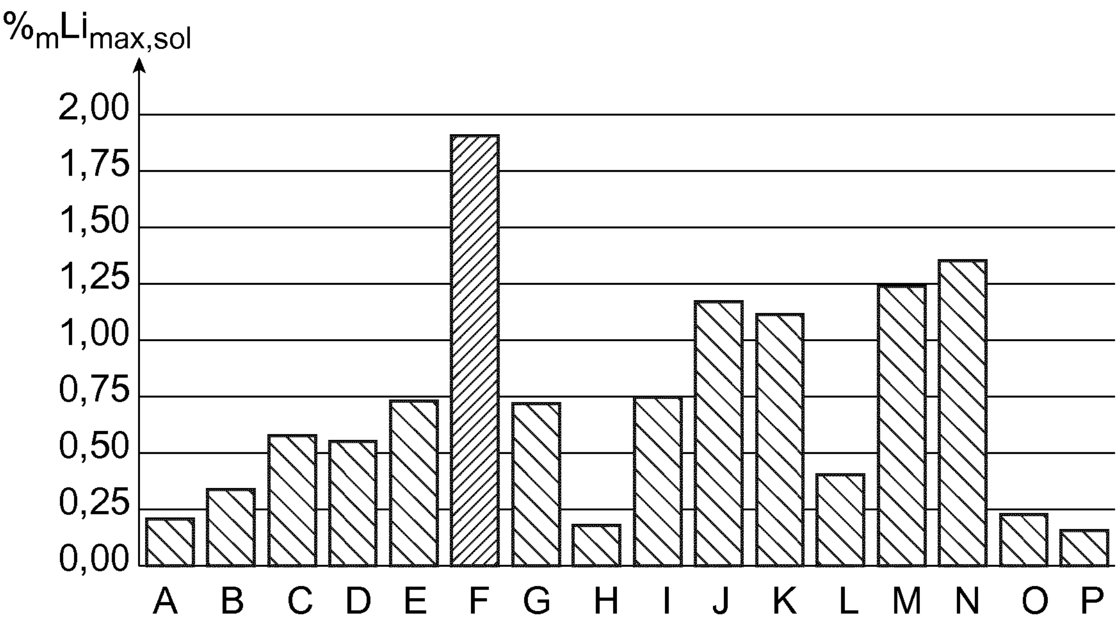
%mLimax,sol
2,00
1,75
1,50
1,25
1,00
0,75
0,50
0,25
0,00
A B C D E F G H I J K L M N O P

FIG. 1

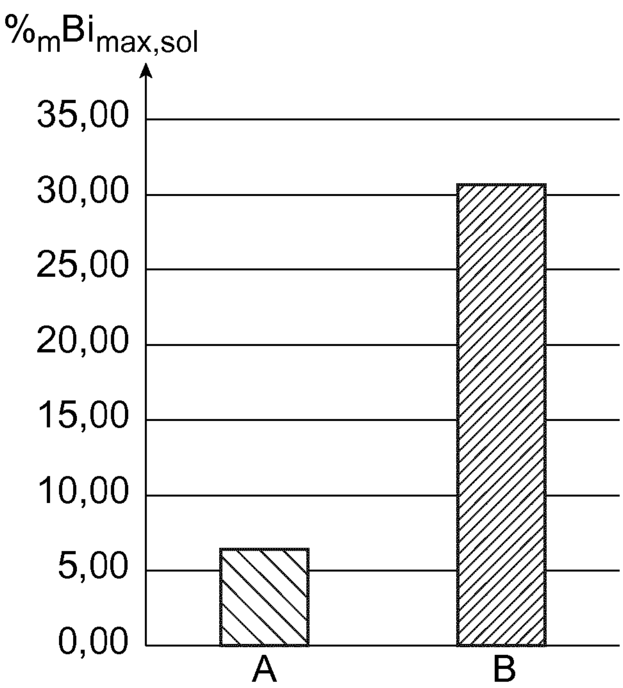
%mBimax,sol
35,00
30,00
25,00
20,00
15,00
10,00
5,00
0,00
A
B

FIG. 2

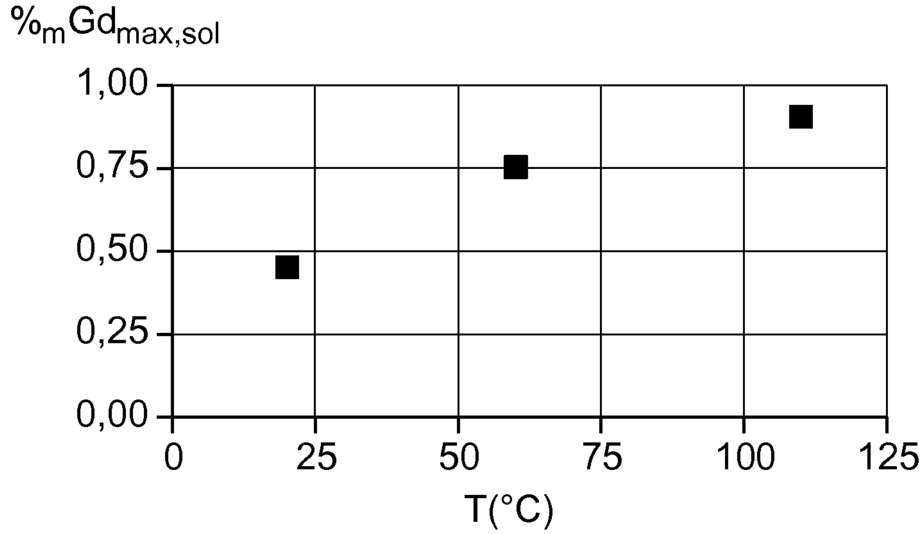
%mGdmax,sol
1,00
0,75
0,50
0,25
0,00
0
25
50
75
100
125
T(°C)

FIG. 3

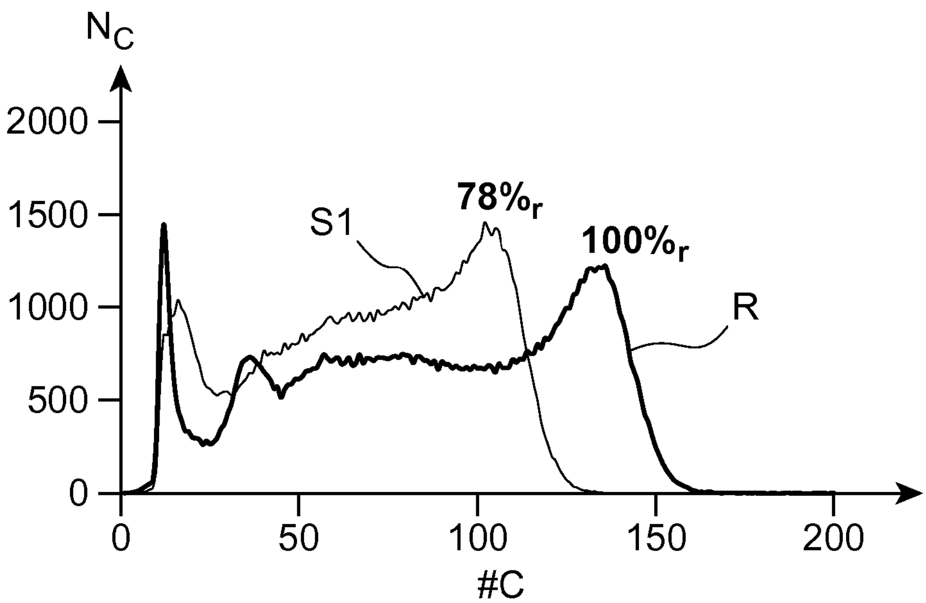
NC
2000
1500
1000
500
0
S1
78%r
100%r
R
0
50
100
150
200
#C

FIG. 4

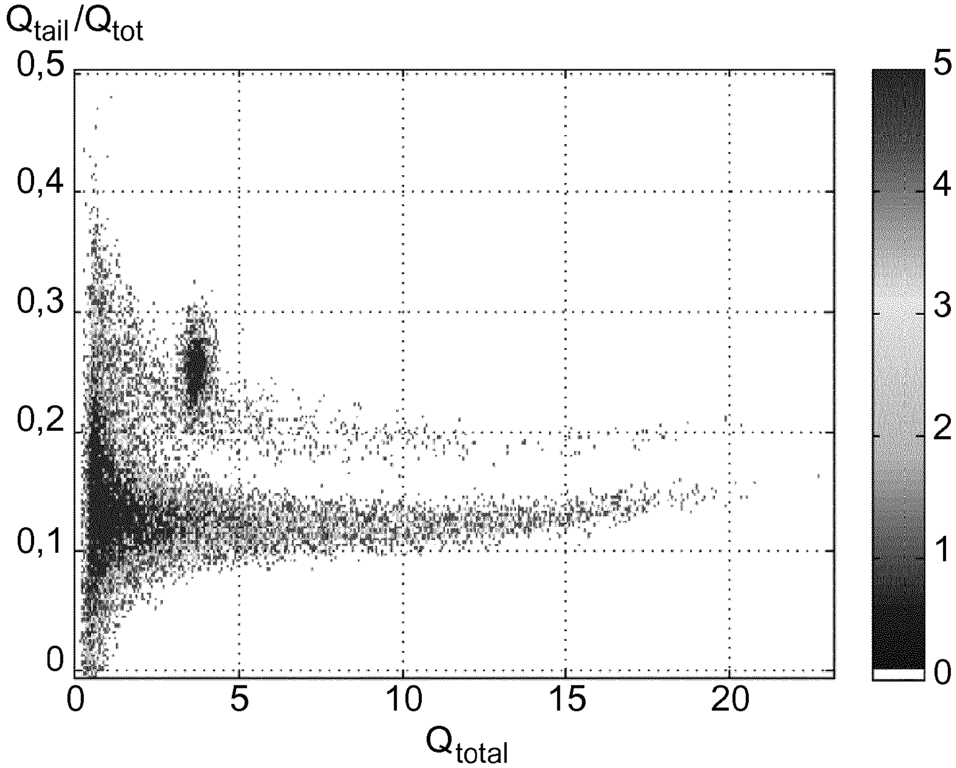

$Q_{tail}/Q_{tot}$
0,5
0,4
0,3
0,2
0,1
0
0
5
10
15
20
$Q_{total}$
5
4
3
2
1
0


FIG. 5A

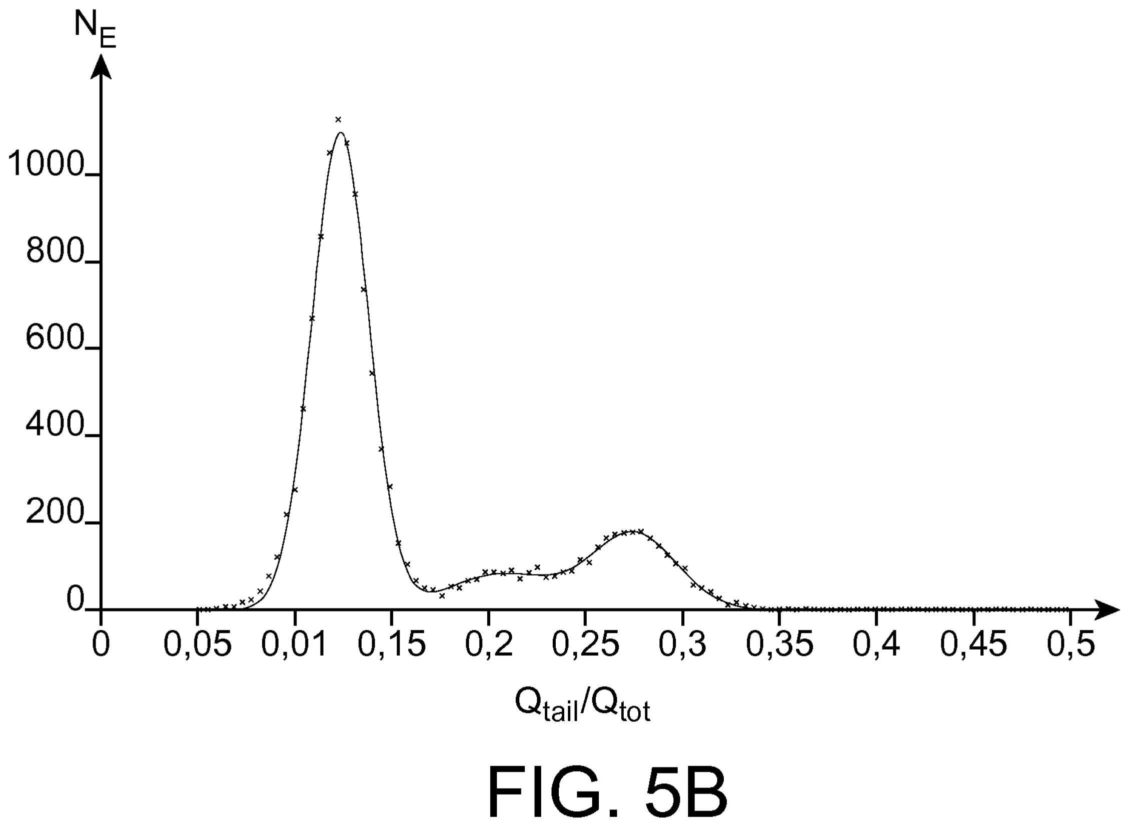

$N_E$
1000
800
600
400
200
0
0
0,05
0,01
0,15
0,2
0,25
0,3
0,35
0,4
0,45
0,5
$Q_{tail}/Q_{tot}$


FIG. 5B

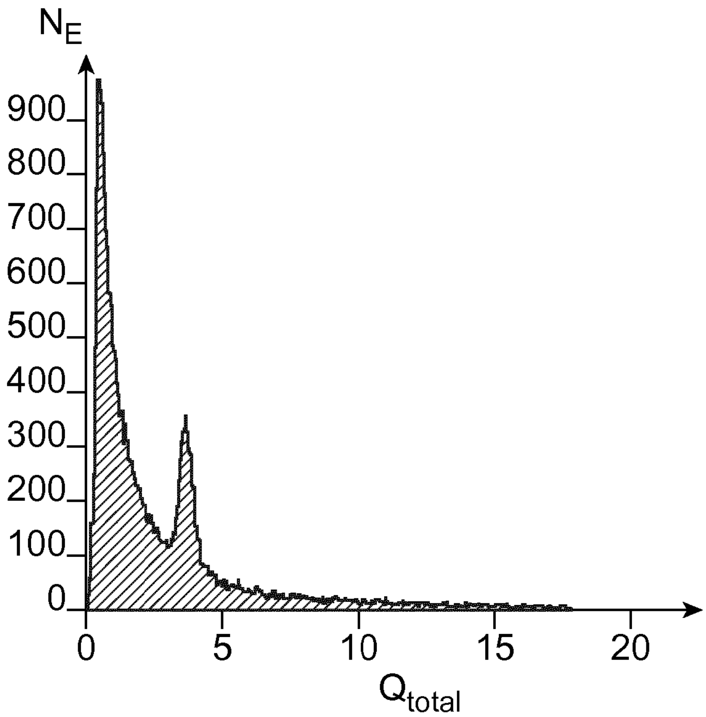
N_E
900
800
700
600
500
400
300
200
100
0
0
5
10
15
20
Q_total

FIG. 5C

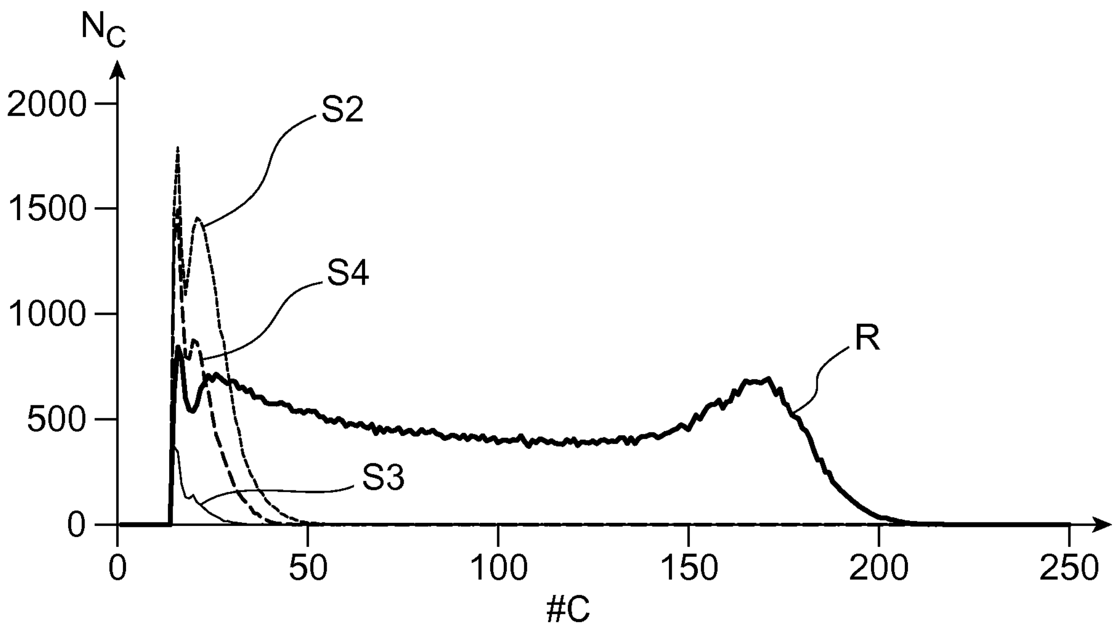
N_C
2000
1500
1000
500
0
S2
S4
R
S3
0
50
100
150
200
250
#C

FIG. 6

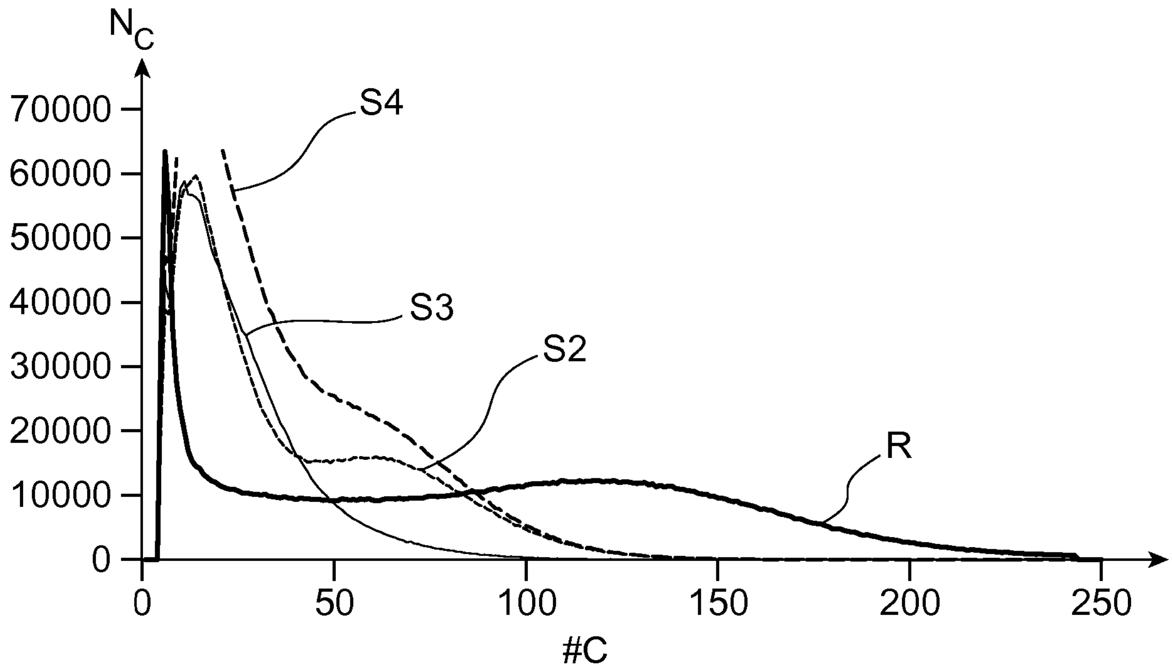
N_C
70000
60000
50000
40000
30000
20000
10000
0
S4
S3
S2
R
0
50
100
150
200
250
#C

FIG. 7

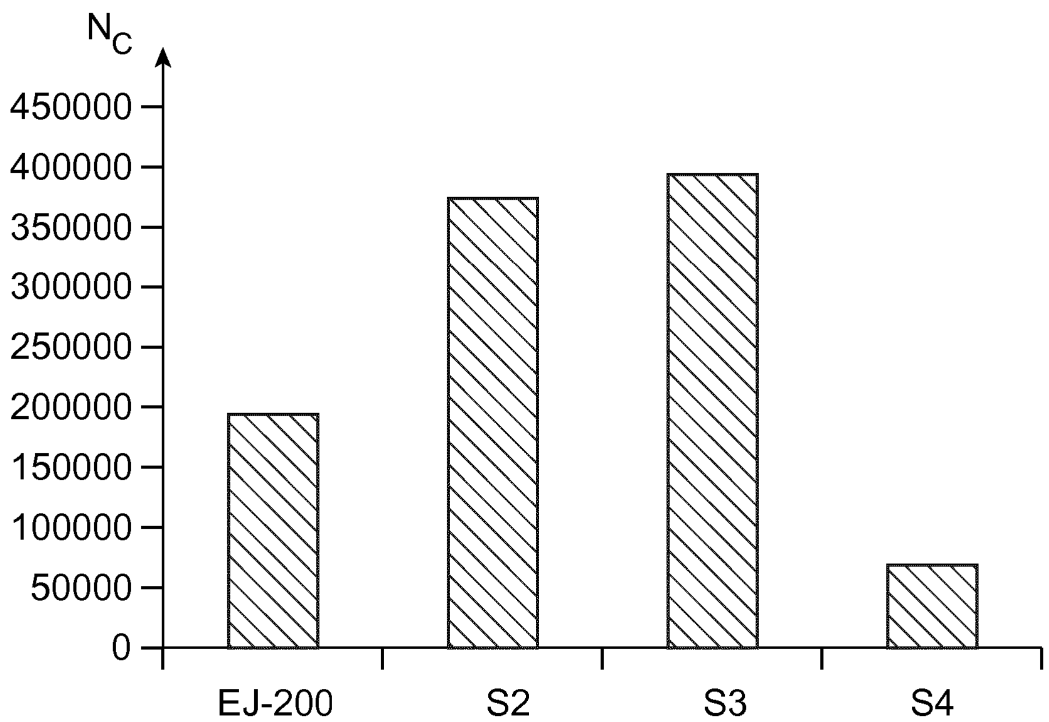
N_C
450000
400000
350000
300000
250000
200000
150000
100000
50000
0
EJ-200
S2
S3
S4

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 9234968 B
- US 9234968 B1


### Littérature non-brevet citée dans la description


- **BREUKERS et al.** Nucl. Instruments Methods Phys. Res. Sect. A Accel. Spectrometers. *Detect. Assoc. Equip.,* 2013, vol. 701, 58-61
- **MABE et al.** Nucl. Instruments Methods Phys. Res. Sect. A Accel. Spectrometers. *Detect. Assoc. Equip.,* 2016, vol. 806, 80-86
- **CHEREPY et al.** Nucl. Instruments Methods Phys. Res. Sect. A Accel. Spectrometers. *Detect. Assoc. Equip.,* 2015, vol. 778, 126-132
- **KISSA.** *J. Coll. Sci.,* 1962, 857-864
- *J. Coll. Sci.,* 1964, 279-289
- **ROHWER ; MARTIN.** *J. Lumin,* 2005, vol. 115 (3-4), 77-90
- **VELAPOLI ; MIELENZ.** *Appl. Opt.,* 1981, vol. 20 (9), 1718
- **KISSA.** *J. Coll. Sci.,* 1964, 279-289
- **ROHWER ; MARTIN.** *J. Lumin.,* 2005, vol. 115 (3-4), 77-90